# EUROPEAN PATENT APPLICATION

(11) **EP 4 592 078 A1**
(43) Date of publication of application: **30.07.2025**
(21) Application number: 23867828.8
(22) Date of filing: 09.06.2023
(51) Int. Cl.: B33Y 10/00, B33Y 30/00, B33Y 50/02, B29C 64/153, B29C 64/264, B29C 64/386, B22F 10/28, B22F 10/366, B22F 12/90

(54) **ADDITIVE MANUFACTURING DEVICE AND ADDITIVE MANUFACTURING METHOD**

(30) Priority: 22.09.2022 JP 2022151022
(71) Applicant: SCREEN Holdings Co., Ltd., Kyoto-shi, Kyoto 602-8585 (JP)
(72) Inventor: HISHITANI, Daisuke, Kyoto-shi, Kyoto 602-8585 (JP)
(74) Representative: Goddar, Heinz J.
(86) International application number: PCT/JP2023/021537
(87) International publication number: WO 2024/062699

(57) **Abstract**

In a three-dimensional modeling apparatus (1), a control part (5) controls a material holding part (3) and an optical head (2) on the basis of design data of a modeled object to supply a modeling material (91) onto a stage (341) and scan a multi spot beam in a predetermined scan direction on a writing target layer (92) which is a surface layer of the supplied modeling material (91), to thereby repeat fusing the modeling material (91) in an area on which light is emitted and writing of a pattern. A non-writing area on which writing is not instructed by the above-described design data includes a narrow non-writing area whose size in the scan direction is not larger than a correction threshold value. Then, with a control by the control part, emission of light onto a narrow-portion adjacent area adjacent to the narrow non-writing area in a writing area on which writing is instructed by the design data is suppressed. It is thereby possible to form a modeled object with high accuracy.

## Description

### TECHNICAL FIELD

The present invention relates to a technique related to three-dimensional modeling.

### [CROSS REFERENCE TO RELATED APPLICATION]

The present application claims the benefit of priority to Japanese Patent Application No. 2022-151022 filed on September 22, 2022, the content of which is incorporated herein by reference in its entirety.

### BACKGROUND ART

In recent years, an SLS (Selective Laser Sintering) type three-dimensional modeling apparatus has been used, which emits a modulated laser beam to a modeling material such as resin powder, metal powder or the like, and fuses and solidifies the modeling material, to thereby perform three-dimensional modeling.

In a powder bed type three-dimensional modeling apparatus, for example, resin powder is spread all over a construction platform thinly in a layered form and a laser beam is scanned on a layer of the resin powder by a galvano mirror or the like, to thereby fuse the resin powder in an irradiation area of the laser beam. Then, by repeating this operation, the fused resin powder is layered and solidified, to thereby form a modeled object. In the powder bed type three-dimensional modeling apparatus, generally, the resin powder on the construction platform is heated to a predetermined preheating temperature lower than a melting point of the resin powder by several °C to ten several °C and the laser beam is emitted to the resin powder whose temperature is kept at the preheating temperature (National Publication of Translation No. 2021-509094 (Document 1)).

In the layer of the resin powder on the construction platform, a temperature of the irradiation area of the laser beam (i.e., writing area) increases and thermal diffusion is caused toward a non-writing area around the writing area. Further, since the light quantity of the laser beam is gradually changed in the vicinity of a boundary between the writing area and the non-writing area, the quantity of light at an end portion of the non-writing area is not zero. For this reason, in a narrow non-writing area or the like sandwiched between two writing areas, with effects of the thermal diffusion from the writing areas and the end-portion light quantity in the writing areas, fusion of the resin powder contrary to the intention occurs, and there arises a possibility that the dimensional accuracy of the modeled object may be degraded.

Further, in a case where new resin powder is supplied onto the layer of the resin powder (hereinafter, also referred to as an "already-written layer") on which a pattern is written in the construction platform, in the layer of the new resin powder, a temperature immediately above a writing area and an area therearound in the already-written layer sometimes becomes higher than a predetermined preheating temperature. Therefore, in a case where the laser beam is emitted immediately above the writing area in the layer of the new resin powder, there is a possibility that fusion of the resin powder contrary to the intention may be caused in the surroundings of the irradiation area of the laser beam. As described above, particularly, in the narrow non-writing area sandwiched between the two writing areas, the possibility that fusion of the resin powder contrary to the intention may occur increases.

### SUMMARY OF THE INVENTION

The present invention is intended for a three-dimensional modeling apparatus, and it is an object of the present invention to form a modeled object with high accuracy.

A first aspect of the present invention is intended for a three-dimensional modeling apparatus, and the three-dimensional modeling apparatus includes a material holding part having a stage for holding a powdery modeling material and a material supply part for supplying a modeling material onto the stage, an optical head for scanning a multi spot beam consisting of a plurality of light spots which are linearly arranged in a predetermined arrangement direction while modulating the multi spot beam on a modeling material on the stage, and a control part for controlling the material holding part and the optical head on the basis of design data of a modeled object to supply a modeling material onto the stage and scan the multi spot beam in a predetermined scan direction on a writing target layer which is a surface layer of a supplied modeling material, to thereby repeat fusing a modeling material in an area on which light is emitted and writing of a pattern. In the three-dimensional modeling apparatus, a non-writing area on which writing is not instructed by the design data includes a narrow non-writing area whose size in one direction of the scan direction, a width direction perpendicular to the scan direction and parallel to the stage, and an up-and-down direction perpendicular to the stage is not larger than a correction threshold value. With a control by the control part, emission of light onto an area adjacent to the narrow non-writing area in a writing area on which writing is instructed by the design data is suppressed.

According to the present invention, it is possible to form a modeled object with high accuracy.

A second aspect of the present invention is intended for a three-dimensional modeling apparatus of the first aspect, wherein the one direction of the narrow non-writing area is the width direction. When a narrow non-writing spot group which includes one or more light spots passing on the narrow non-writing area among the plurality of light spots is positioned on the narrow non-writing area, the narrow non-writing spot group and two correction spot groups adjacent to the narrow non-writing spot group on both sides in the arrangement direction are turned off with a control by the control part.

A third aspect of the present invention is intended for a three-dimensional modeling apparatus of the first aspect, wherein adjustment of gradation is possible in the plurality of light spots. The one direction of the narrow non-writing area is the width direction. When a narrow non-writing spot group which includes one or more light spots passing on the narrow non-writing area among the plurality of light spots is positioned on the narrow non-writing area, with a control by the control part, the narrow non-writing spot group is turned off, and light intensity of two or more light spots included in each correction spot group in two correction spot groups adjacent to the narrow non-writing spot group on both sides in the arrangement direction is adjusted to increase as the light spots go away from the narrow non-writing spot group in the arrangement direction.

A fourth aspect of the present invention is intended for a three-dimensional modeling apparatus of the first aspect (or of any one of the first aspect to the third aspect), wherein the one direction of the narrow non-writing area is the scan direction. With a control by the control part, a narrow non-writing spot group which includes one or more light spots passing on the narrow non-writing area among the plurality of light spots is turned off when the narrow non-writing spot group is positioned on the narrow non-writing area, and the narrow non-writing spot group is turned off also when the narrow non-writing spot group is positioned on correction areas adjacent to the narrow non-writing area on both sides in the scan direction.

A fifth aspect of the present invention is intended for a three-dimensional modeling apparatus of the first aspect (or of any one of the first aspect to the third aspect), wherein adjustment of gradation is possible in the plurality of light spots. The one direction of the narrow non-writing area is the scan direction. With a control by the control part, a narrow non-writing spot group which includes one or more light spots passing on the narrow non-writing area among the plurality of light spots is turned off when the narrow non-writing spot group is positioned on the narrow non-writing area, and light intensity of the narrow non-writing spot group is adjusted to increase as the narrow non-writing spot group goes away from the narrow non-writing area in the scan direction when the narrow non-writing spot group is positioned on correction areas adjacent to the narrow non-writing area on both sides in the scan direction.

A sixth aspect of the present invention is intended for a three-dimensional modeling apparatus of the first aspect (or of any one of the first aspect to the fifth aspect), wherein the one direction of the narrow non-writing area is the up-and-down direction. With a control by the control part, a narrow non-writing spot group which includes one or more light spots passing on the narrow non-writing area among the plurality of light spots is turned off when the narrow non-writing spot group is positioned on the narrow non-writing area in a writing target layer including the narrow non-writing area, and the narrow non-writing spot group is turned off also when the narrow non-writing spot group is positioned over the narrow non-writing area in the writing target layer including an upper writing area adjacent to an upper side of the narrow non-writing area.

A seventh aspect of the present invention is intended for a three-dimensional modeling apparatus of the first aspect (or of any one of the first aspect to the fifth aspect), wherein adjustment of gradation is possible in the plurality of light spots. The one direction of the narrow non-writing area is the up-and-down direction. With a control by the control part, a narrow non-writing spot group which includes one or more light spots passing on the narrow non-writing area among the plurality of light spots is turned off when the narrow non-writing spot group is positioned on the narrow non-writing area in a writing target layer including the narrow non-writing area, and light intensity of the narrow non-writing spot group is adjusted to increase as the narrow non-writing spot group goes upward when the narrow non-writing spot group is positioned over the narrow non-writing area in a plurality of writing target layers including an upper writing area adjacent to an upper side of the narrow non-writing area.

A eighth aspect of the present invention is intended for a three-dimensional modeling apparatus of any one of the first aspect to the seventh aspect further includes a temperature measurement part for measuring a temperature distribution on an upper surface of a modeling material on the stage. The correction threshold value is variable. The correction threshold value becomes smaller as a temperature increases, which is in an area corresponding to the non-writing area and measured by the temperature measurement part.

The present invention is also intended for a three-dimensional modeling method. A ninth aspect of the present invention is intended for a three-dimensional modeling method, and the three-dimensional modeling method includes a) supplying a powdery modeling material onto a stage, b) scanning a multi spot beam in a predetermined scan direction, the multi spot beam consisting of a plurality of light spots which are linearly arranged in a predetermined arrangement direction, while modulating the multi spot beam on the basis of design data of a modeled object on a writing target layer which is a surface layer of a modeling material supplied onto the stage, and c) repeating the operations a) and b). A non-writing area on which writing is not instructed by the design data includes a narrow non-writing area whose size in one direction of the scan direction, a width direction perpendicular to the scan direction and parallel to the stage, and an up-and-down direction perpendicular to the stage is not larger than a correction threshold value. Emission of light onto an area adjacent to the narrow non-writing area in a writing area on which writing is instructed by the design data is suppressed in the operation b).

These and other objects, features, aspects and advantages of the present invention will become more apparent from the following detailed description of the present invention when taken in conjunction with the accompanying drawings.

### BRIEF DESCRIPTION OF DRAWINGS

FIG. 1 is a view showing a configuration of a three-dimensional modeling apparatus in accordance with one preferred embodiment;
FIG. 2 is a view showing a configuration of a control part;
FIG. 3 is a block diagram showing functions of the control part;
FIG. 4 is a flowchart showing an operation flow for forming a modeled object in the three-dimensional modeling apparatus;
FIG. 5 is a perspective view of the modeled object;
FIG. 6 is a transverse sectional view of the modeled object;
FIG. 7 is a transverse sectional view of the modeled object;
FIG. 8 is a view showing a light quantity profile and the like in writing a pattern in a three-dimensional modeling apparatus of Comparative Example;
FIG. 9 is a view showing a light quantity profile and the like in writing a pattern in the three-dimensional modeling apparatus using a first correction method;
FIG. 10 is a view showing a light quantity profile and the like in writing a pattern in the three-dimensional modeling apparatus using a second correction method;
FIG. 11 is a perspective view of the modeled object;
FIG. 12 is a transverse sectional view of the modeled object;
FIG. 13 is a view showing a light quantity profile and the like in writing a pattern in the three-dimensional modeling apparatus using a third correction method;
FIG. 14 is a view showing a light quantity profile and the like in writing a pattern in the three-dimensional modeling apparatus using a fourth correction method;
FIG. 15 is a perspective view of the modeled object;
FIG. 16 is a longitudinal sectional view of the modeled object;
FIG. 17 is a view showing a light quantity profile and the like in writing a pattern in the three-dimensional modeling apparatus using a fifth correction method; and
FIG. 18 is a view showing a light quantity profile and the like in writing a pattern in the three-dimensional modeling apparatus using a sixth correction method.

### DESCRIPTION OF EMBODIMENTS

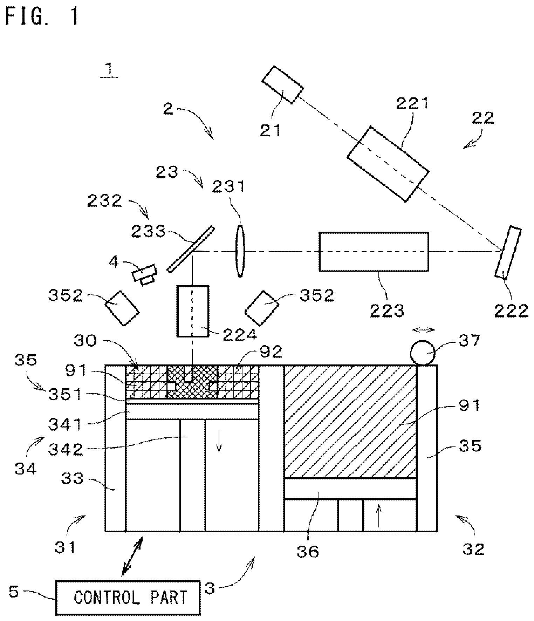

FIG. 1 is a view showing a configuration of a three-dimensional modeling apparatus 1 in accordance with one preferred embodiment of the present invention. The three-dimensional modeling apparatus 1 exemplarily shown in FIG. 1 is an SLS (Selective Laser Sintering) type three-dimensional modeling apparatus which emits a modulated laser beam onto a powdery modeling material to fuse the modeling material and then solidifies the modeling material, to thereby perform three-dimensional modeling. The modeling material is, for example, a resin, a metal, engineering plastics, ceramics, or the like. The modeling material may contain a plurality of kinds of materials. In the present preferred embodiment, the modeling material is a powdery synthetic resin.

The three-dimensional modeling apparatus 1 includes an optical head 2, a material holding part 3, a temperature measurement part 4, and a control part 5. The material holding part 3 is disposed below the optical head 2 and holds a powdery modeling material 91. FIG. 1 shows the material holding part 3 in a longitudinal section and the modeling material 91 is hatched. The optical head 2 scan a laser beam on the modeling material 91 held by the material holding part 3 while modulating the laser beam. The light emitted from the optical head 2 to the modeling material 91 is a multi spot beam consisting of a plurality of light spots which are linearly arranged in a predetermined arrangement direction. The temperature measurement part 4 measures a temperature of the modeling material 91 held by the material holding part 3. The control part 5 controls the optical head 2, the material holding part 3, and the temperature measurement part 4.

The material holding part 3 includes a modeling part 31 and a material supply part 32. The modeling part 31 includes a first cylinder 33 and a first piston 34. The first cylinder 33 is a tubular member extending in an up-and-down direction. The plan-view shape of an internal space of the first cylinder 33 is, for example, a substantially rectangular shape. The first piston 34 is a member to be accommodated in the internal space of the first cylinder 33. The first piston 34 is movable in the up-and-down direction inside the internal space of the first cylinder 33. The first piston 34 includes a substantially flat plate-like stage 341 substantially perpendicular to the up-and-down direction and a column 342 supporting the stage 341 from below. The plan-view shape of the stage 341 is substantially the same as that of the internal space of the first cylinder 33.

In the modeling part 31, a three-dimensional space surrounded by an inner surface of the first cylinder 33 and an upper surface of the stage 341 serves as a modeling space 30 in which the three-dimensional modeling is performed. In the modeling space 30, the powdery modeling material 91 is held on the stage 341. In other words, the three-dimensional modeling apparatus 1 is a powder bed type three-dimensional modeling apparatus.

The modeling part 31 includes a heater 35 for heating the modeling material 91 on the stage 341. The heater 35 gives energy substantially uniformly to the modeling material 91 on the stage 341, to thereby increase the temperature of the modeling material 91 up to a temperature lower than the melting point thereof and keep the temperature. In the exemplary case shown in FIG. 1, the heater 35 includes a first heater 351 and a second heater 352. The first heater 351 is a substantially flat plate-like electric heater provided on an upper part of the stage 341. The first heater 351 is, for example, incorporated in the stage 341 and provided over a substantially entire surface of the stage 341 in a plan view. The second heater 352 is a halogen lamp which is disposed above the stage 341 away therefrom and emits light toward the stage 341. The configuration, arrangement, and the like of the heater 35 are not limited to the above but may be changed in various ways.

The material supply part 32 includes a second cylinder 35, a second piston 36, and a squeegee 37. The second cylinder 35 is a tubular member extending in the up-and-down direction and disposed adjacent to the side of the first cylinder 33. The plan-view shape of an internal space of the second cylinder 35 is, for example, a substantially rectangular shape. The second piston 36 is a member to be accommodated in the internal space of the second cylinder 35. The second piston 36 is movable in the up-and-down direction inside the internal space of the second cylinder 35. The plan-view shape of the second piston 36 is substantially the same as that of the internal space of the second cylinder 35.

**In** the material supply part 32, a three-dimensional space surrounded by an inner surface of the second cylinder 35 and an upper surface of the second piston 36 serves as a storage (pooling) space for storing the modeling material 91 to be supplied to the modeling part 31. The squeegee 37 is a rodlike (e.g., substantially columnar) or plate-like member extending in a horizontal direction across an upper opening of the second cylinder 35. The squeegee 37 is movable in the horizontal direction along an upper end surface of the second cylinder 35.

**In** the material holding part 3, when the modeling material 91 is supplied onto the stage 341, the first piston 34 of the modeling part 31 goes down by a predetermined distance. An upper surface of the modeling material 91 on the stage 341 thereby becomes positioned lower than an upper end surface of the first cylinder 33. On the other hand, in the material supply part 32, the second piston 36 goes up by a predetermined distance, and the modeling material 91 inside the second cylinder 35 is thereby lifted upward. Then, the squeegee 37 moves from on the second cylinder 35 to on the first cylinder 33, to thereby supply the modeling material 91 protruded upward from the upper end surface of the second cylinder 35 into the modeling space 30 of the modeling part 31. An upper surface of the modeling material 91 held inside the modeling space 30 is positioned at the substantially the same height as that of an upper end surface of the first cylinder 33.

The optical head 2 includes a laser light source 21, an illumination optical system 221, an optical modulator 222, a first projection optical system 223, a scanning part 23, and a second projection optical system 224. The laser light source 21 emits a laser beam to an optical apparatus 22. The laser light source 21 is, for example, a fiber laser light source. Further, the type of the laser light source 21 may be changed in various ways. Furthermore, the wavelength of the laser beam emitted from the laser light source 21 is set as appropriate in accordance with the type or the like of the modeling material 91.

The illumination optical system 221, the optical modulator 222, and the first projection optical system 223 modulate the laser beam from the laser light source 21 into a modulated beam and emits the modulated beam to the scanning part 23. The second projection optical system 224 guides a multi spot beam from the scanning part 23 to the modeling material 91 on the stage 341. The illumination optical system 221, the first projection optical system 223, and the second projection optical system 224 each include a plurality of optical elements such as lenses or the like.

The illumination optical system 221 shapes, for example, the laser beam from the laser light source 21 into a shaped beam having a substantially rectangular shape which is long in one direction (hereinafter, referred to as a "long axis direction") and guides the shaped beam to the optical modulator 222. **In** other words, the cross-sectional shape of the shaped beam is a substantially rectangular shape which is long in the long axis direction and short in a short axis direction perpendicular to the long axis direction. The long axis direction and the short axis direction are directions perpendicular to a traveling direction (i.e., an optical axis direction) of the shaped beam. Further, the cross-sectional shape of the shaped beam is a shape of the shaped beam on a plane perpendicular to the traveling direction of the shaped beam. The cross-sectional shape of the shaped beam can be regarded as a substantially straight linear shape extending in the long axis direction.

The optical modulator 222 modulates the shaped beam from the illumination optical system 221 into the modulated beam and guides the modulated beam to the projection optical system 223. As the optical modulator 222, for example, an LPLV (Liner Planar Light Valve) which is one type of a PLV (Planar Light Valve) is used. The above-described modulated beam is a multi spot beam consisting of a plurality of light spots arranged linearly in the long axis direction. In each light spot of the multi spot beam, adjustment of gradation (i.e., adjustment of light intensity of outgoing light) is possible. Further, the optical modulator 222 does not necessarily need to be the LPLV but may have any other configuration.

The scanning part 23 reflects the modulated beam (i.e., the multi spot beam) from the first projection optical system 223 and scans the modulated beam on the modeling material 91 inside the modeling space 30 of the material holding part 3 through the second projection optical system 224. The scanning part 23 includes, for example, a relay lens 231 and a galvano scanner 232. The galvano scanner 232 is a scanning mechanism including a galvano mirror 233 and a galvano motor (not shown). In the scanning part 23, the galvano mirror 233 is rotated by the galvano motor, to thereby change the traveling direction of the multi spot beam reflected by the galvano mirror 233. As a result, the multi spot beam emitted onto the modeling material 91 is scanned in a scan direction inclined with respect to the long axis direction (e.g., perpendicular to the long axis direction) of the multi spot beam.

In the exemplary case shown in FIG. 1, a left-and-right direction of this figure is the above-described scan direction parallel to the stage 341. Further, a direction perpendicular to the paper of FIG. 1 is a width direction perpendicular to the scan direction and parallel to the stage 341 (i.e., an arrangement direction of the plurality of light spots in the multi spot beam). Further, the scanning part 23 does not necessarily need to include the galvano scanner but may have any other configuration.

The temperature measurement part 4 measures a temperature distribution on the upper surface of the modeling material 91 on the stage 341. The temperature measurement part 4 is, for example, an infrared thermography camera which is capable of picking up an image of the substantially entire upper surface of the modeling material 91 on the stage 341. A measurement result (e.g., picked-up image) obtained by the temperature measurement part 4 is sent to the control part 5.

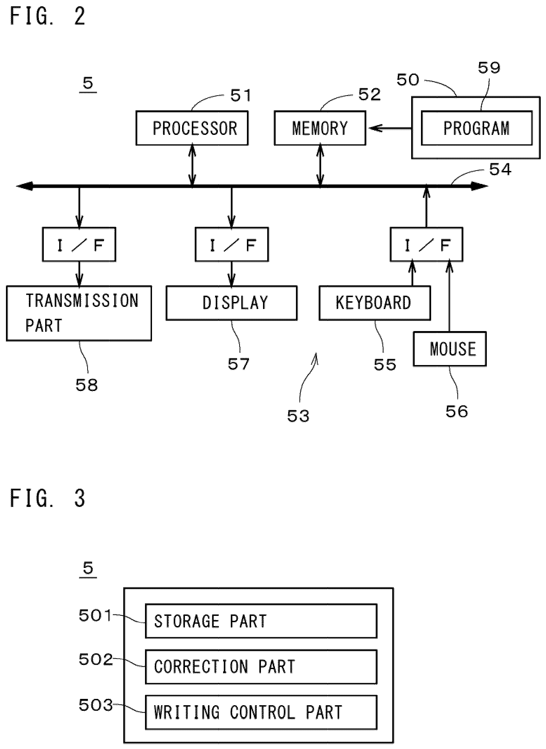

FIG. 2 is a view showing a configuration of the control part 5. The control part 5 is an ordinary computer including a processor 51, a memory 52, an input/output part 53, and a bus 54. The bus 54 is a signal circuit for connecting the processor 51, the memory 52, and the input/output part 53. The memory 52 stores therein various information. The memory 52 reads out a program 59 which is a program product stored in advance in, for example, a storage medium 50 and stores the program 59 therein. The storage medium 50 is, for example, a USB memory or a CD-ROM. The processor 51 executes various processings (e.g., numerical calculation) while using the memory 52 and the like in accordance with the above-described program 59 and the like stored in the memory 52. The input/output part 53 includes a keyboard 55 and a mouse 56 which receive an input from an operator, and a display 57 which displays thereon an output or the like from the processor 51. The input/output part 53 also includes a transmission part 58 for transmitting the output or the like from the processor 51.

FIG. 3 is a block diagram showing functions implemented by executing the above-described program 59 by the control part 5. The three-dimensional modeling apparatus 1 includes a storage part 501, a correction part 502, and a writing control part 503 as functions to be implemented by the control part 5. The storage part 501 is implemented mainly by the memory 52 and stores therein design data of the modeled object to be formed by the three-dimensional modeling apparatus 1 and the temperature distribution of the modeling material 91, which is measured by the temperature measurement part 4, or the like. The correction part 502 and the writing control part 503 are implemented mainly by the processor 51. The correction part 502 corrects the design data of the modeled object. The writing control part 503 controls the material holding part 3, the optical head 2, and the like.

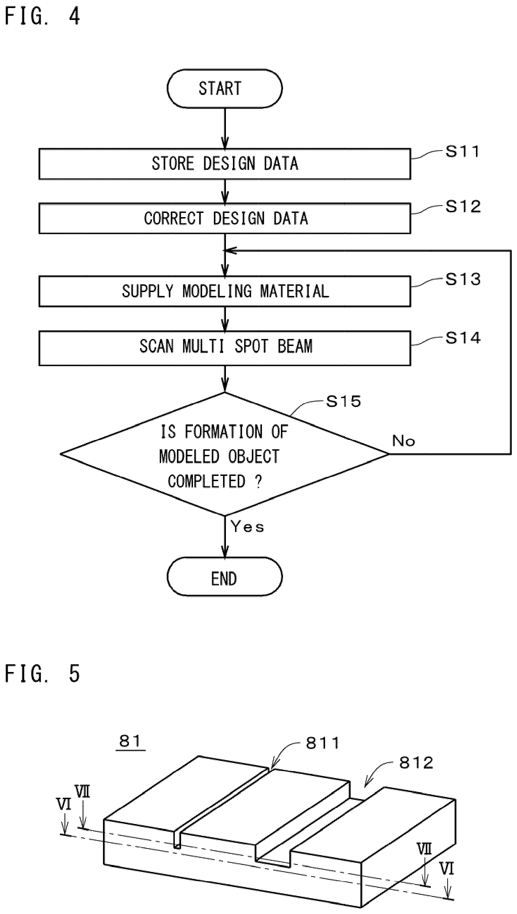

Next, with reference to FIG. 4, the operation flow for forming the modeled object in the three-dimensional modeling apparatus 1 will be described. In the three-dimensional modeling apparatus 1, first, the design data of a three-dimensional modeled object to be formed are stored into the storage part 501 of the control part 5 (Step S11). The design data are a set of data (hereinafter, also referred to as "cross-sectional data") representing a transverse cross section obtained by slicing the modeled object by a predetermined thickness in the up-and-down direction. The cross-sectional data are data representing a shape of a portion corresponding to one layer in a case where the modeled object is divided into a plurality of layers laminated in the up-and-down direction.

Subsequently, the correction part 502 corrects the design data, to thereby generate writing data (Step S12). The writing data generated in Step S12 are stored in the storage part 501. Details of the correction of the design data in Step S12 will be described later.

Next, the writing control part 503 controls the material holding part 3 to supply the powdery modeling material 91 onto the stage 341 (Step S13). The modeling material 91 on the stage 341 is preheated by the heater 35 and the temperature of the modeling material 91 increases, and the temperature thereof is kept at a temperature lower than the melting point of the modeling material 91 and higher than the crystal point thereof (i.e., crystallization temperature). In a case where resin powder having a melting point of 185 °C and a crystal point of 150 °C is used as the modeling material 91, for example, the temperature of the modeling material 91 on the stage 341 is kept at a temperature higher than 150 °C and lower than 185 °C (e.g., about 173 °C). The modeling material 91 on the stage 341 can be kept in a state of powder without being fused. Further, the modeling material 91 fused on the stage 341 is kept in a fused state without being solidified.

Then, the writing control part 503 controls the optical head 2 to scan the above-described multi spot beam in the above-described scan direction while modulating the multi spot beam on a surface layer (hereinafter, also referred to as a "writing target layer 92") of the modeling material 91 supplied onto the stage 341 by using the above-described writing data (Step S14). The temperature of the modeling material 91 in an area of the writing target layer 92, to which light is emitted, thereby increases to become a modeling temperature (e.g., about 220 °C) not lower than the melting point, and the modeling material 91 in this area is fused, to thereby write a pattern (i.e., a pattern formed of the fused modeling material 91) on the writing target layer 92.

Further, writing of the pattern in Step S14 may be performed by one-pass writing in which the multi spot beam is scanned in the scan direction only one time or may be performed by multipath writing in which scanning of the multi spot beam in the scan direction and step movement in the width direction (i.e., subscan direction) are repeated.

In the writing target layer 92, heat is diffused from the modeling material 91 fused in the area to which the light is emitted, to the modeling material 91 around this area. The temperature of the modeling material 91 in the area to which the light is emitted thereby decreases, and the modeling material 91 in this area is kept in a fused state since the temperature of the modeling material 91 in the writing target layer 92 is kept higher than the above-described crystal point by the heater 35.

When the writing of the pattern on the writing target layer 92 is completed, it is checked whether formation of the modeled object is completed or not (Step S15). When the formation of the modeled object is not completed, the process goes back to Step S13, and a new modeling material 91 is supplied onto the layer of the modeling material 91 on which the pattern is written on the stage 341, to thereby form a new writing target layer 92 (Step S13). Then, the multi spot beam is scanned on the new writing target layer 92 and a pattern formed of the fused modeling material 91 is written (Step S14).

As described above, in the pattern written in Step S14, the modeling material 91 is kept in the fused state, and also in the pattern written in the Step S14 one time before, the modeling material 91 is kept in the fused state. Thus, in the three-dimensional modeling apparatus 1, since the modeling material 91 in the fused state is layered, when the modeling material 91 is solidified, formed is a modeled object having high binding power in a layer direction (i.e., up-and-down direction).

In the three-dimensional modeling apparatus 1, Steps S13 to S14 are repeated until formation of the modeled object is completed. While Steps S13 to S14 are repeated, the heater 35 continues to heat the modeling material 91, and when the repeat of Steps S13 to S14 is ended, the heating of the modeling material 91 by the heater 35 is also finished. The temperature of the modeling material 91 kept in the fused state in the above-described pattern thereby decreases to a temperature not higher than the crystal point and the modeling material 91 is solidified, and a three-dimensional modeled object of the solidified modeling material 91 is formed.

Next, while formation of a modeled object in the three-dimensional modeling apparatus 1 is compared with formation of a modeled object in a three-dimensional modeling apparatus of Comparative Example, correction of the design data in above-described Step S12 will be described. The three-dimensional modeling apparatus of Comparative Example has substantially the same configuration as that of the three-dimensional modeling apparatus 1 but does not perform correction of the design data in Step S12. In other words, in the three-dimensional modeling apparatus of Comparative Example, in Step S14, writing is performed on the writing target layer 92 by using not-corrected design data.

FIG. 5 is a perspective view of a modeled object 81 to be modeled by the three-dimensional modeling apparatus 1 and the three-dimensional modeling apparatus of Comparative Example. The modeled object 81 has a substantially rectangular parallelepiped shape and a first groove 811 and a second groove 812 are provided in an upper surface of the modeled object 81. The first groove 811 and the second groove 812 are each a substantially straight linear groove extending in parallel to the above-described scan direction and provided over the entire length in the scan direction of the modeled object 81. The first groove 811 and the second groove 812 have the same depth which is smaller than the height of the modeled object 81. The size of the first groove 811 in the width direction is smaller than that of the second groove 812.

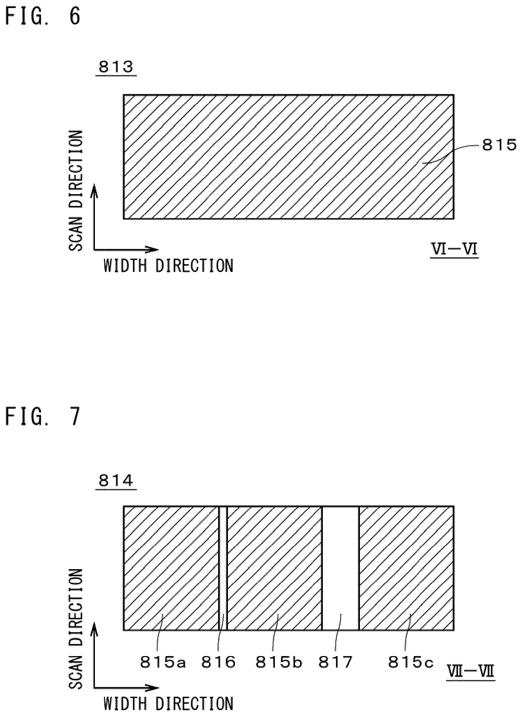

FIG. 6 is a view showing a transverse cross section 813 of the modeled object 81 at a position of VI-VI in FIG. 5. FIG. 7 is a view showing a transverse cross section 814 of the modeled object 81 at a position of VII-VII in FIG. 5. Respective cross-sectional data corresponding to the transverse cross sections 813 and 814 are included in the above-described design data (i.e., uncorrected design data). In the transverse cross section 813, an entire rectangular area corresponding to the modeled object 81 is a writing area 815 on which writing is instructed by the design data. In FIG. 6, the writing area 815 is hatched.

In the transverse cross section 814, among the rectangular area immediately above the writing area 815 in the transverse cross section 813, respective rectangular strip-like areas corresponding to the first groove 811 and the second groove 812 are non-writing areas 816 and 817 on which writing is not instructed by the design data. Further, a rectangular area on the left side of the non-writing area 816, a rectangular area between the non-writing area 816 and the non-writing area 817, and a rectangular area on the right side of the non-writing area 817 are writing areas 815a, 815b, and 815c, respectively, on which writing is instructed by the design data. In FIG. 7, the writing areas 815a, 815b, and 815c are hatched.

In the exemplary case shown in FIG. 7, the size of the non-writing area 816 corresponding to the first groove 811 in the width direction (i.e., the left-and-right direction in this figure) is not larger than a predetermined correction threshold value. Further, the size of the non-writing area 817 corresponding to the second groove 812 in the width direction is larger than this correction threshold value (i.e., the correction threshold value in the width direction). In the following description, the non-writing area 816 will be also referred to as a "narrow non-writing area 816". In other words, in the exemplary case shown in FIG. 7, the non-writing areas 816 and 817 include the narrow non-writing area 816.

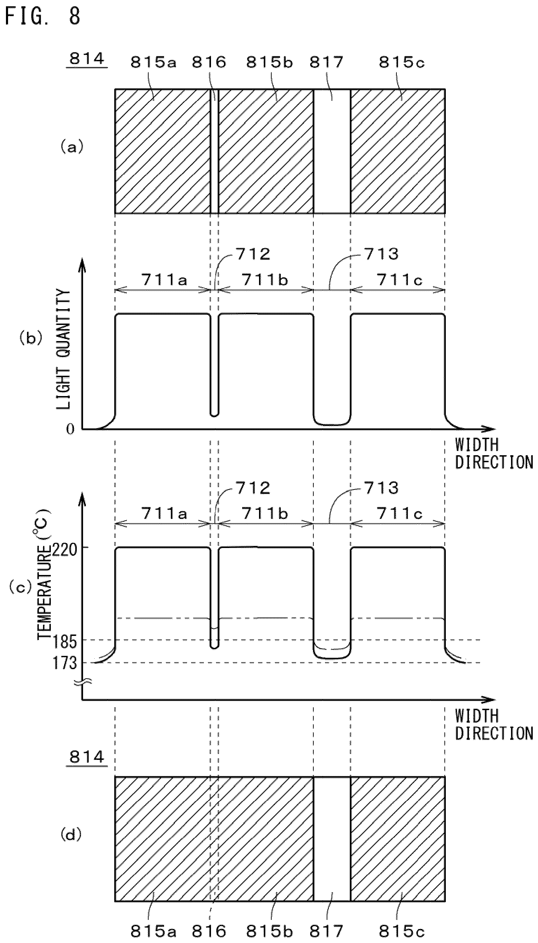

FIG. 8 is a view showing a light quantity profile and the like in writing a pattern corresponding to the transverse cross section 814 in the three-dimensional modeling apparatus of Comparative Example. A view with reference sign (a) in FIG. 8 (hereinafter, also referred to as "FIG. 8(a)") is a view showing a pattern (i.e., design pattern) on the design data in the transverse cross section 814. FIG. 8(b) is a graph showing the light quantity profile of the multi spot beam to be emitted onto the writing target layer 92. The horizontal axis in FIG. 8(b) represents the width direction and the vertical axis thereof represents the light quantity. FIG. 8(c) is a view showing a temperature distribution in the writing target layer 92 to which the multi spot beam having the light quantity profile shown in FIG. 8(b) is emitted. The horizontal axis in FIG. 8(c) represents the width direction and the vertical axis thereof represents the temperature of the modeling material 91 in the writing target layer 92. FIG. 8(d) is a view showing a pattern (i.e., writing pattern) which is actually written in the transverse cross section 814.

In the three-dimensional modeling apparatus of Comparative Example, as described above, since no correction is performed on the design data, as shown in FIG. 8(b), areas having the same widths as those of the writing areas 815a, 815b, and 815c in the design pattern are defined as ON areas 711a, 711b, and 711c, respectively, in each of which a spot of the multi spot beam is lit up. Further, areas having the same widths as those of the non-writing areas 816 and 817 in the design pattern are defined as OFF areas 712 and 713, respectively, in each of which a spot of the multi spot beam is extinguished. As indicated by a solid line in FIG. 8(c), in the ON areas 711a, 711b, and 711c, the temperature of the modeling material 91 in the writing target layer 92 increases up to a predetermined modeling temperature (e.g., 220 °C) higher than the melting point (e.g., 185 °C) of the modeling material 91.

As shown in FIG. 8(b), a light quantity distribution in the ON area 711a is a substantially rectangular distribution. Further, outside an end portion of the ON area 711a in the width direction, the light quantity does not abruptly become zero but gradually decreases as the light goes away from the ON area 711a. In the following description, the light quantity occurring outside the end portion of the ON area 711a in the width direction due to the light of the light spot in the ON area 711a will be also referred as an "end-portion light quantity". The same applies to the ON areas 711b and 711c.

In the OFF area 713 corresponding to the non-writing area 817 having a relatively large size in the width direction, the light quantity at both end portions in the width direction slightly increases by the end-portion light quantities of the ON areas 711b and 711c adjacent to both sides thereof. Further, in the OFF area 713, thermal diffusion from the ON areas 711b and 711c also occurs. For this reason, as indicated by the solid line in FIG. 8(c), the temperature of the modeling material 91 in the OFF area 713 slightly increases from the preheating temperature (e.g., 173 °C).

On the other hand, in the OFF area 712 corresponding to the narrow non-writing area 816 having a small size in the width direction, as shown in FG. 8(b), since the end-portion light quantities of the ON areas 711a and 711b adjacent to both sides thereof are accumulated, the light quantity thereof becomes higher than that of the OFF area 713 corresponding to the non-writing area 817. Further, in the OFF area 712, heat diffused from the ON area 711a and that from the ON area 711b also overlap each other. Therefore, as indicated by the solid line in FIG. 8(c), the temperature of the modeling material 91 in the OFF area 712 becomes higher than that of the modeling material 91 in the OFF area 713.

After that, with the passage of time, due to the thermal diffusion from the ON areas 711a, 711b, and 711c, as indicated by a two-dot chain line in FIG. 8(c), the temperature of the modeling material 91 in the ON areas 711a, 711b, and 711c decreases and the temperature of the modeling material 91 in the OFF areas 712 and 713 increases. As a result, the temperature of the modeling material 91 in the OFF area 712 becomes higher than the melting point (e.g., 185 °C), and there arises a possibility that fusion of the modeling material 91 contrary to the intention may occur in the OFF area 712. As a result, as shown in FIG. 8(d), in the actual writing pattern, the narrow non-writing area 816 disappears or the width of the narrow non-writing area 816 becomes smaller than a design value thereof between the writing areas 815a and 815b. Further, since the temperature of the modeling material 91 in the OFF area 713 does not increase up to the melting point, no fusion of the modeling material 91 occurs in the OFF area 713. Therefore, the non-writing area 817 exists between the writing areas 815b and 815c.

In contrast to this, in the three-dimensional modeling apparatus 1 in accordance with the present preferred embodiment, in above-described Step S12, the correction part 502 (see FIG. 3) corrects the design data to thereby generate the writing data, and by adjusting the light quantity profile of the multi spot beam to be emitted onto the writing target layer 92 (see FIG. 1) on the basis of the writing data, the fusion of the modeling material 91 contrary to the intention is suppressed.

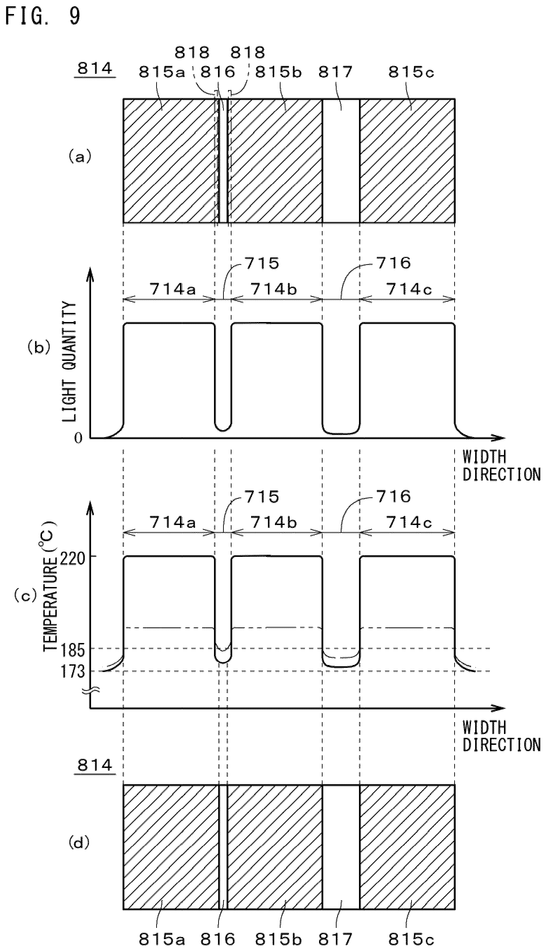

FIG. 9 is a view showing a light quantity profile and the like in writing a pattern corresponding to the transverse cross section 814 in the three-dimensional modeling apparatus 1. FIG. 9(a) is a view showing a pattern (i.e., design pattern) on the design data in the transverse cross section 814 and is the same as shown in FIG. 8(a). FIG. 9(b) is a graph showing the light quantity profile of the multi spot beam to be emitted onto the writing target layer 92. The horizontal axis in FIG. 9(b) represents the width direction and the vertical axis thereof represents the light quantity. FIG. 9(c) is a view showing a temperature distribution in the writing target layer 92 to which the multi spot beam having the light quantity profile shown in FIG. 9(b) is emitted. The horizontal axis in FIG. 9(c) represents the width direction and the vertical axis thereof represents the temperature of the modeling material 91 in the writing target layer 92. FIG. 9(d) is a view showing a pattern (i.e., writing pattern) which is actually written in the transverse cross section 814.

In the three-dimensional modeling apparatus 1, by the correction of the design data by the correction part 502, as shown in FIG. 9(b), the width of an OFF area 715 corresponding to the narrow non-writing area 816 in the width direction is made larger than the width of the OFF area 712 shown in FIG. 8(b) in the width direction (i.e., the width of the narrow non-writing area 816 in the design pattern). Specifically, a boundary between an ON area 714a corresponding to the writing area 815a in the design pattern and the OFF area 715 is moved leftward with respect to the boundary between the ON area 711a and the OFF area 712 shown in FIG. 8(b). Further, a boundary between an ON area 714b corresponding to the writing area 815b in the design pattern and the OFF area 715 is moved rightward with respect to the boundary between the ON area 711b and the OFF area 712 shown in FIG. 8(b).

Specifically, in the three-dimensional modeling apparatus 1, emission of light onto areas (hereinafter, also referred to as "narrow-portion adjacent areas 818") in the writing areas 815a and 815b, which are adjacent to the narrow non-writing area 816, is suppressed. In other words, the accumulated light quantity in the narrow-portion adjacent areas 818 per unit area is reduced to be lower than that in areas of the writing areas 815a and 815b except the narrow-portion adjacent areas 818 per unit area. In FIG. 9(a), each narrow-portion adjacent area 818 is surrounded by a two-dot chain line.

Correction of the above-described light quantity profile is achieved by turning off one or more light spots passing on the narrow non-writing area 816 (hereinafter, also referred to as a "narrow non-writing spot group") among the plurality of light spots of the multi spot beam and also turning off two light spot groups (hereinafter, also referred to as "correction spot groups") adjacent to the narrow non-writing spot group on both sides in the width direction when the narrow non-writing spot group is positioned on the narrow non-writing area 816.

In a case where the narrow non-writing spot group includes two or more light spots, the two or more light spots are arranged in series in the arrangement direction of the plurality of light spots in the multi spot beam. Each correction spot group includes one or two or more light spots. In a case where the correction spot group includes two or more light spots, the two or more light spots are arranged in series in the above-described arrangement direction. It is preferable that the number of light spots included in each correction spot group should increase as a difference between the melting point and the crystal point of the modeling material 91 becomes smaller. Further, no light spot exists between each correction spot group and the narrow non-writing spot group.

In the three-dimensional modeling apparatus 1, by correcting the light quantity profile of the multi spot beam to be emitted onto the writing target layer 92 as shown in FIG. 9(b), accumulation of the end-portion light quantities of the ON areas 714a and 714b adjacent to both sides of the OFF area 715 corresponding to the narrow non-writing area 816 is suppressed. Further, in the OFF area 715, overlap of the heat to be diffused from the ON areas 714a and 714b is also suppressed.

For this reason, the temperature of the modeling material 91 in the OFF area 715 increases to be higher than the preheating temperature (e.g., 173 °C) to some degree, as indicated by the solid line in FIG. 9(c), but not to the degree in the OFF area 712 as shown in FIG. 8(c). Further, after the thermal diffusion from the ON areas 714a and 714b occurs with the passage of time, as indicated by the two-dot chain, the temperature of the modeling material 91 at a center portion in the width direction of the OFF area 715 becomes lower than the melting point (e.g., 185 °C), and the temperature of the modeling material 91 at both end portions in the width direction of the OFF area 715 becomes not lower than the melting point. Therefore, at the center portion in the width direction of the OFF area 715, the fusion of the modeling material 91 does not occur unlike in the OFF area 712 shown in FIG. 8(c). On the other hand, at both end portions in the width direction of the OFF area 715, the fusion of the modeling material 91 occurs as intended.

In the three-dimensional modeling apparatus 1, ON/OFF of the light spots other than the above-described correction spot group in the multi spot beam (e.g., ON/OFF or the like in an OFF area 716 and the ON area 714c corresponding to the non-writing area 817 and the writing area 815c, respectively) is the same as that in the three-dimensional modeling apparatus of Comparative Example. For this reason, the fusion of the modeling material 91 in the writing areas 815a, 815b, and 815c is performed in accordance with the design data, and in the non-writing area 817, the fusion of the modeling material 91 does not occur in accordance with the design data. As a result, as shown in FIG. 9(d), it is possible to perform writing of a pattern on the writing target layer 92 with higher accuracy as compared with that in the three-dimensional modeling apparatus of Comparative Example.

In the three-dimensional modeling apparatus 1, a correction method of the design data in Step S12 is not limited to the above-described method (hereinafter, also referred to as a "first correction method") but may be changed in various ways. Hereinafter, a second correction method will be described.

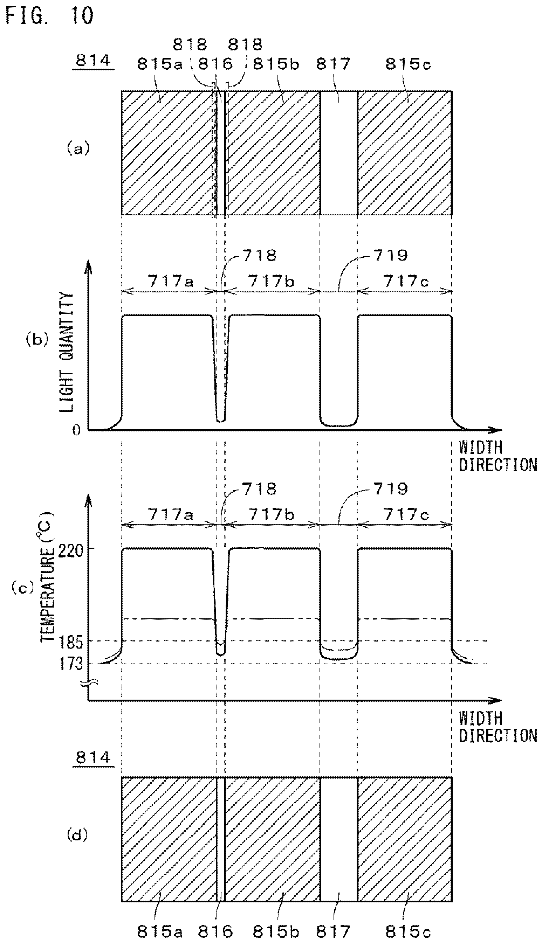

FIG. 10 is a view showing a light quantity profile and the like in writing a pattern corresponding to the transverse cross section 814 in the three-dimensional modeling apparatus 1 using the second correction method. FIG. 10(a) is a view showing a pattern (i.e., design pattern) on the design data in the transverse cross section 814 and is the same as shown in FIG. 9(a). FIG. 10(b) is a graph showing the light quantity profile of the multi spot beam to be emitted onto the writing target layer 92 on the basis of the writing data generated by the second correction method. The horizontal axis in FIG. 10(b) represents the width direction and the vertical axis thereof represents the light quantity. FIG. 10(c) is a view showing a temperature distribution in the writing target layer 92 to which the multi spot beam having the light quantity profile shown in FIG. 10(b) is emitted. The horizontal axis in FIG. 10(c) represents the width direction and the vertical axis thereof represents the temperature of the modeling material 91 in the writing target layer 92. FIG. 10(d) is a view showing a pattern (i.e., writing pattern) which is actually written in the transverse cross section 814.

In the three-dimensional modeling apparatus 1 using the second correction method, by the correction of the design data by the correction part 502, as shown in FIG. 10(b), on both sides of an OFF area 718 corresponding to the narrow non-writing area 816 in the width direction, a boundary between ON areas 717a and 717b corresponding to the writing areas 815a and 815b in the design pattern and the OFF area 718 is tapered. Specifically, the light quantity at an end portion of the ON area 717a on the side of the OFF area 718 gradually decreases as the light goes nearer to the OFF area 718. Further, the light quantity at an end portion of the ON area 717b on the side of the OFF area 718 gradually decreases as the light goes nearer to the OFF area 718. The width of the OFF area 718 (i.e., the width in an area in which the light quantity is not largely changed in the vicinity of zero in FIG. 10(b)) is the same as that of the OFF area 712 shown in FIG. 8(b) (i.e., the width of the narrow non-writing area 816 in the design pattern). Furthermore, the width of the OFF area 718 may be larger or smaller than that of the OFF area 712.

Specifically, also in the three-dimensional modeling apparatus 1 using the second correction method, substantially like in the three-dimensional modeling apparatus 1 using the first correction method, emission of light onto the narrow-portion adjacent areas 818 in the writing areas 815a and 815b is suppressed. In other words, the accumulated light quantity in the narrow-portion adjacent areas 818 per unit area is reduced to be lower than that in the areas of the writing areas 815a and 815b except the narrow-portion adjacent areas 818 per unit area. In FIG. 10(a), each narrow-portion adjacent area 818 is surrounded by a two-dot chain line.

Correction of the above-described light quantity profile is achieved by turning off the narrow non-writing spot group among the plurality of light spots of the multi spot beam when the narrow non-writing spot group is positioned on the narrow non-writing area 816 and by adjusting the light intensity of two or more light spots included in each correction spot group in the two correction spot groups adjacent to the narrow non-writing spot group on both sides in the width direction to increase as the light spots go away from the narrow non-writing spot group in the above-described arrangement direction.

In a case where the narrow non-writing spot group includes two or more light spots, the two or more light spots are arranged in series in the above-described arrangement direction. Each correction spot group includes two or more light spots arranged in series in the arrangement direction. In each correction spot group, the light intensity of the light spot furthest away from the narrow non-writing spot group in the width direction may be substantially the same as that of the light spot corresponding to the area of the writing areas 815a and 815b except the narrow-portion adjacent area 818. It is preferable that the number of light spots included in each correction spot group should increase as the difference between the melting point and the crystal point of the modeling material 91 becomes smaller. The gradient of the light quantity profile in the area corresponding to the narrow-portion adj acent area 818 thereby becomes gentler. Further, no light spot exists between each correction spot group and the narrow non-writing spot group.

In the three-dimensional modeling apparatus 1 using the second correction method, by correcting the light quantity profile of the multi spot beam to be emitted onto the writing target layer 92 as shown in FIG. 10(b), accumulation of the end-portion light quantities of the ON areas 717a and 717b adjacent to the OFF area 718 corresponding to the narrow non-writing area 816 on both sides in the width direction is suppressed. Further, in the OFF area 718, overlap of the heat to be diffused from the ON areas 717a and 717b is also suppressed. For this reason, the temperature of the modeling material 91 in the OFF area 718 increases to be higher than the preheating temperature (e.g., 173 °C) to some degree, as indicated by the solid line in FIG. 10(c), but does not increase up to the melting point (e.g., 185 °C) of the modeling material 91 also after the thermal diffusion from the ON areas 717a and 717b occurs with the passage of time, as indicated by the two-dot chain. Therefore, in the OFF area 718, the fusion of the modeling material 91 does not occur unlike in the OFF area 712 shown in FIG. 8(c). Further, even if the fusion of the modeling material 91 somewhat occurs in the OFF area 718, the fusion is suppressed as compared with that of the modeling material 91 in the OFF area 712 shown in FIG. 8(c). On the other hand, in the areas of the ON areas 717a and 717b, which are adjacent to the OFF area 718, the fusion of the modeling material 91 occurs as intended.

In the three-dimensional modeling apparatus 1 using the second correction method, ON/OFF of the light spots other than the above-described correction spot group in the multi spot beam (e.g., ON/OFF or the like in an OFF area 719 and the ON area 717c corresponding to the non-writing area 817 and the writing area 815c, respectively) is the same as that in the three-dimensional modeling apparatus using the first correction method. For this reason, the fusion of the modeling material 91 in the writing areas 815a, 815b, and 815c is performed in accordance with the design data, and in the non-writing area 817, the fusion of the modeling material 91 does not occur in accordance with the design data. As a result, as shown in FIG. 10(d), it is possible to perform writing of a pattern on the writing target layer 92 with higher accuracy as compared with that in the three-dimensional modeling apparatus of Comparative Example.

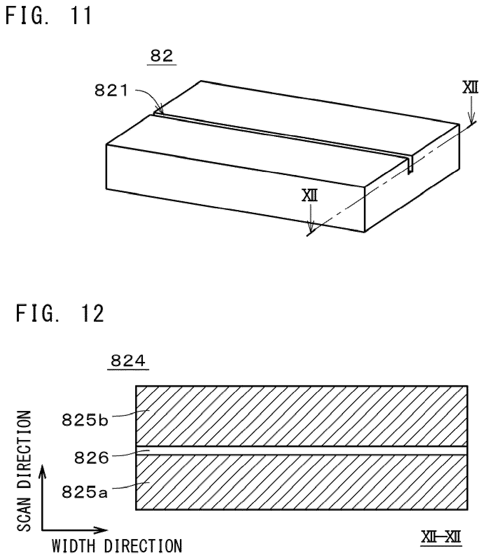

Next, a third correction method and a fourth correction method used in Step S12 will be described. FIG. 11 is a perspective view showing a modeled object 82 to be modeled by the three-dimensional modeling apparatus 1 using the third correction method or the fourth correction method. The modeled object 82 has a substantially rectangular parallelepiped shape and a groove 821 is provided in an upper surface of the modeled object 82. The groove 821 is a substantially straight linear groove extending in parallel to the above-described width direction and provided over the entire length in the width direction of the modeled object 82. The size of the groove 821 in the scan direction is substantially the same as that of the first groove 811 in the width direction shown in FIG. 5.

FIG. 12 is a view showing a transverse cross section 824 of the modeled object 82 at a position of XII-XII in FIG. 11. Cross-sectional data corresponding to the transverse cross section 824 are included in the above-described design data (i.e., uncorrected design data). In the transverse cross section 824, a rectangular strip-like area corresponding to the groove 821 is a non-writing area 826 on which writing is not instructed by the design data. In the exemplary case shown in FIG. 12, the size of the non-writing area 826 in the scan direction is not larger than a predetermined correction threshold value, and in the following description, the non-writing area 826 will be also referred to as a "narrow non-writing area 826". Further, the correction threshold value (i.e., the correction threshold value in the scan direction) may be the same as or different from the above-described correction threshold value in the width direction. In the transverse cross section 824, rectangular areas on both sides of the narrow non-writing area 826 in the scan direction are writing areas 825a and 825b, respectively, on which writing is instructed by the design data. In FIG. 12, the writing areas 825a and 825b are hatched.

In the three-dimensional modeling apparatus of Comparative Example in which no correction is performed on the design data, during writing of the writing area 825a, all the light spots in the above-described multi spot beam are lit up, and only when the multi spot beam is positioned on the narrow non-writing area 826, all the light spots are extinguished, and during writing of the writing area 825b, all the light spots are lit up again. For this reason, substantially like in the narrow non-writing area 816 shown in FIG. 8, there is a possibility that fusion of the modeling material 91 contrary to the intention may occur in the narrow non-writing area 826.

In contrast to this, in the three-dimensional modeling apparatus 1 using the third correction method or the fourth correction method, the correction part 502 corrects the design data to thereby generate writing data, and by adjusting the light quantity profile of the multi spot beam to be emitted onto the writing target layer 92 on the basis of the writing data, the fusion of the modeling material 91 contrary to the intention is suppressed.

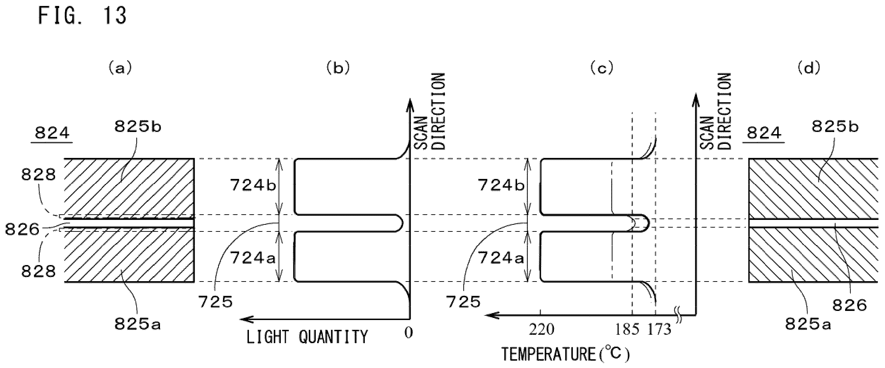

FIG. 13 is a view showing a light quantity profile and the like in writing a pattern corresponding to the transverse cross section 824 in the three-dimensional modeling apparatus 1 using the third correction method. FIG. 13(a) is a view showing part of a pattern (i.e., design pattern) on the design data in the transverse cross section 824. FIG. 13(b) is a graph showing the light quantity profile of the multi spot beam to be emitted onto the writing target layer 92 on the basis of the writing data generated by the third correction method. The vertical axis in FIG. 13(b) represents the scan direction and the horizontal axis thereof represents the light quantity. FIG. 13(c) is a view showing a temperature distribution in the writing target layer 92 to which the multi spot beam having the light quantity profile shown in FIG. 13(b) is emitted. The vertical axis in FIG. 13(c) represents the scan direction and the horizontal axis thereof represents the temperature of the modeling material 91 in the writing target layer 92. FIG. 13(d) is a view showing part of a pattern (i.e., writing pattern) which is actually written in the transverse cross section 824.

In the three-dimensional modeling apparatus 1 using the third correction method, by the correction of the design data by the correction part 502, as shown in FIG. 13(b), the width of an OFF area 725 corresponding to the narrow non-writing area 826 in the scan direction is made larger than that of the narrow non-writing area 826 in the scan direction in the design pattern shown in FIG. 13(a). Specifically, a boundary between an ON area 724a corresponding to the writing area 825a in the design pattern and an OFF area 725 is moved to a lower side (i.e., to the frontward side in the scan direction) in FIG. 13 with respect to a boundary between the writing area 825a and the narrow non-writing area 826. Further, a boundary between an ON area 724b corresponding to the writing area 825b in the design pattern and the OFF area 725 is moved to an upper side (i.e., to the backward side in the scan direction) in FIG. 13 with respect to a boundary between the writing area 825b and the narrow non-writing area 826.

Specifically, in the three-dimensional modeling apparatus 1 using the third correction method, emission of light onto areas (hereinafter, also referred to as "correction areas 828") in the writing areas 825a and 825b, which are adjacent to the narrow non-writing area 826, is suppressed. In other words, the accumulated light quantity in the correction areas 828 per unit area is reduced to be lower than that in areas of the writing areas 825a and 825b except the correction areas 828 per unit area. In FIG. 13(a), each correction area 828 is surrounded by a two-dot chain line.

Correction of the above-described light quantity profile is achieved by turning off one or more light spots passing on the narrow non-writing area 826 (hereinafter, also referred to as a "narrow non-writing spot group") among the plurality of light spots of the multi spot beam when the narrow non-writing spot group is positioned on the narrow non-writing area 826 and also turning off when the narrow non-writing spot group is positioned on correction areas 828 adjacent to the narrow non-writing area 826 on both sides in the scan direction.

In a case where the narrow non-writing spot group includes two or more light spots, the two or more light spots are arranged in series in the arrangement direction of the plurality of light spots in the multi spot beam. In the above-described exemplary case, the narrow non-writing spot group includes all the light spots in the multi spot beam. Further, the narrow non-writing area 826 and each correction area 828 are continuous in the scan direction, and any other area does not exist between the narrow non-writing area 826 and each correction area 828 in the scan direction. It is preferable that the width of each correction area 828 in the scan direction should increase as the difference between the melting point and the crystal point of the modeling material 91 becomes smaller.

In the three-dimensional modeling apparatus 1 using the third correction method, by correcting the light quantity profile of the multi spot beam to be emitted onto the writing target layer 92 as shown in FIG. 13(b), accumulation of the end-portion light quantities of the ON areas 724a and 724b adjacent to the OFF area 725 corresponding to the narrow non-writing area 826 on both sides in the scan direction is suppressed. Further, in the OFF area 725, overlap of the heat to be diffused from the ON areas 724a and 724b is also suppressed. For this reason, the temperature of the modeling material 91 in the OFF area 725 increases to be higher than the preheating temperature (e.g., 173 °C) to some degree, as indicated by the solid line in FIG. 13(c), but not to the degree in the three-dimensional modeling apparatus of Comparative Example. Furthermore, after the thermal diffusion from the ON areas 724a and 724b occurs with the passage of time, as indicated by the two-dot chain, the temperature of the modeling material 91 at a center portion in the scan direction of the OFF area 725 becomes lower than the melting point (e.g., 185 °C), and the temperature of the modeling material 91 at both end portions in the scan direction of the OFF area 725 becomes not lower than the melting point. Therefore, at the center portion in the scan direction of the OFF area 725, the fusion of the modeling material 91 does not occur unlike in the three-dimensional modeling apparatus of Comparative Example. On the other hand, at both end portions in the scan direction of the OFF area 725, the fusion of the modeling material 91 occurs as intended.

In the three-dimensional modeling apparatus 1 using the third correction method, the fusion of the modeling material 91 in the writing areas 825a and 825b is performed in accordance with the design data, and as shown in FIG. 13(d), it is possible to perform writing of a pattern on the writing target layer 92 with higher accuracy as compared with that in the three-dimensional modeling apparatus of Comparative Example.

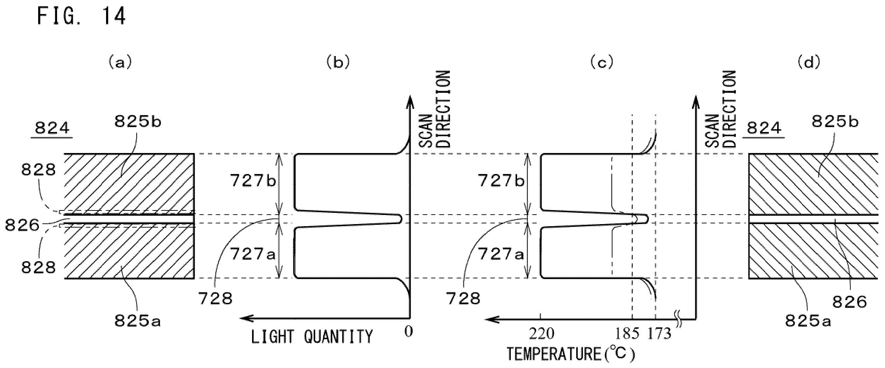

FIG. 14 is a view showing a light quantity profile and the like in writing a pattern corresponding to the transverse cross section 824 in the three-dimensional modeling apparatus 1 using the fourth correction method. FIG. 14(a) is a view showing part of a pattern (i.e., design pattern) on the design data in the transverse cross section 824 and is the same as shown in FIG. 13(a). FIG. 14(b) is a graph showing the light quantity profile of the multi spot beam to be emitted onto the writing target layer 92 on the basis of the writing data generated by the fourth correction method. The vertical axis in FIG. 14(b) represents the scan direction and the horizontal axis thereof represents the light quantity. FIG. 14(c) is a view showing a temperature distribution in the writing target layer 92 to which the multi spot beam having the light quantity profile shown in FIG. 14(b) is emitted. The vertical axis in FIG. 14(c) represents the scan direction and the horizontal axis thereof represents the temperature of the modeling material 91 in the writing target layer 92. FIG. 14(d) is a view showing part of a pattern (i.e., writing pattern) which is actually written in the transverse cross section 824.

In the three-dimensional modeling apparatus 1 using the fourth correction method, by the correction of the design data by the correction part 502, as shown in FIG. 14(b), on both sides of an OFF area 728 corresponding to the narrow non-writing area 826 in the width direction, a boundary between ON areas 727a and 727b corresponding to the writing areas 825a and 825b in the design pattern and the OFF area 728 is tapered. Specifically, the light quantity at an end portion of the ON area 727a on the side of the OFF area 728 gradually decreases as the light goes nearer to the OFF area 728. Further, the light quantity at an end portion of the ON area 727b on the side of the OFF area 728 gradually decreases as the light goes nearer to the OFF area 728. The width of the OFF area 728 is the same as that of the narrow non-writing area 826 in the design pattern. Furthermore, the width of the OFF area 728 may be larger or smaller than that of the narrow non-writing area 826.

Specifically, also in the three-dimensional modeling apparatus 1 using the fourth correction method, substantially like in the three-dimensional modeling apparatus 1 using the third correction method, emission of light onto the correction areas 828 in the writing areas 825a and 825b is suppressed. In other words, the accumulated light quantity in the correction areas 828 per unit area is reduced to be lower than that in the areas of the writing areas 825a and 825b except the correction areas 828 per unit area. In FIG. 14(a), each correction area 828 is surrounded by a two-dot chain line. Each correction area 828 corresponds to the two or more light spots in the multi spot beam. Among the two or more light spots in the correction area 828, the accumulated light quantity of the light spot furthest away from the narrow non-writing area 826 in the scan direction per unit area may be substantially the same as that in the areas of the writing areas 825a and 825b except the correction area 828 per unit area.

Correction of the above-described light quantity profile is achieved by turning off the narrow non-writing spot group among the plurality of light spots of the multi spot beam when the narrow non-writing spot group is positioned on the narrow non-writing area 826 and by adjusting the light intensity of each light spot of the narrow non-writing spot group to increase as the light spot goes away from the narrow non-writing area 826 in the scan direction when the narrow non-writing spot group is positioned on the correction area 828.

In a case where the narrow non-writing spot group includes two or more light spots, the two or more light spots are arranged in series in the arrangement direction of the plurality of light spots in the multi spot beam. Further, in the above-described exemplary case, the narrow non-writing spot group includes all the light spots in the multi spot beam. Furthermore, the narrow non-writing area 826 and each correction area 828 are continuous in the scan direction, and any other area does not exist between the narrow non-writing area 826 and each correction area 828 in the scan direction. It is preferable that the width of each correction area 828 in the scan direction should increase as the difference between the melting point and the crystal point of the modeling material 91 becomes smaller. The gradient of the light quantity profile in the correction area 828 thereby becomes gentler.

In the three-dimensional modeling apparatus 1 using the fourth correction method, by correcting the light quantity profile of the multi spot beam to be emitted onto the writing target layer 92 as shown in FIG. 14(b), accumulation of the end-portion light quantities of the ON areas 727a and 727b adjacent to the OFF area 728 corresponding to the narrow non-writing area 826 on both sides in the scan direction is suppressed. Further, in the OFF area 728, overlap of the heat to be diffused from the ON areas 727a and 727b is also suppressed. For this reason, the temperature of the modeling material 91 in the OFF area 728 increases to be higher than the preheating temperature (e.g., 173 °C) to some degree, as indicated by the solid line in FIG. 14(c), but does not increase up to the melting point (e.g., 185 °C) of the modeling material 91 also after the thermal diffusion from the ON areas 727a and 727b occurs with the passage of time, as indicated by the two-dot chain. Therefore, in the OFF area 728, the fusion of the modeling material 91 does not occur unlike in the three-dimensional modeling apparatus of Comparative Example. Further, even if the fusion of the modeling material 91 somewhat occurs in the OFF area 728, the fusion is suppressed as compared with that of the modeling material 91 in the three-dimensional modeling apparatus of Comparative Example. On the other hand, in the areas of the ON areas 727a and 727b, which are adjacent to the OFF area 728, the fusion of the modeling material 91 occurs as intended.

In the three-dimensional modeling apparatus 1 using the fourth correction method, substantially like in the three-dimensional modeling apparatus 1 using the third correction method, the fusion of the modeling material 91 in the writing areas 825a and 825b is performed in accordance with the design data, and as shown in FIG. 14(d), it is possible to perform writing of a pattern on the writing target layer 92 with higher accuracy as compared with that in the three-dimensional modeling apparatus of Comparative Example.

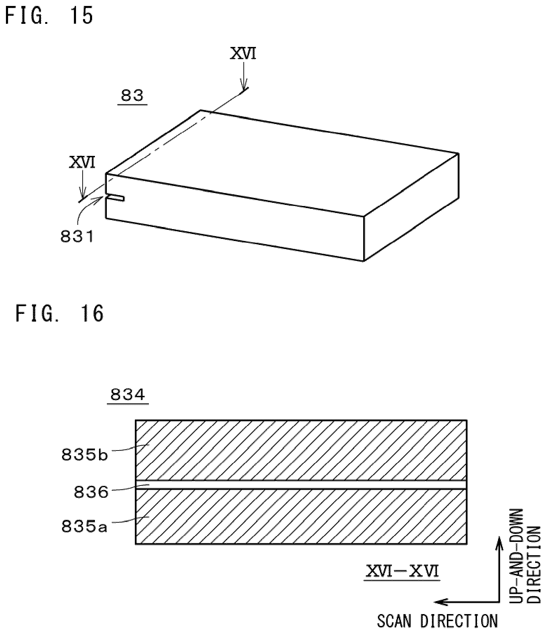

Next, a fifth correction method and a sixth correction method used in Step S12 will be described. FIG. 15 is a perspective view of a modeled object 83 to be modeled by the three-dimensional modeling apparatus 1 using the fifth correction method or the sixth correction method. The modeled object 83 has a substantially rectangular parallelepiped shape, and a groove 831 is provided in a left side surface of the modeled object 83. The groove 831 is a substantially straight linear groove extending in parallel to the above-described scan direction and provided over the entire length in the scan direction of the modeled object 83. The size of the groove 831 in the up-and-down direction is substantially the same as that of the first groove 811 in the width direction shown in FIG. 5. The size of the groove 831 in the width direction is larger than that of the groove 831 in the up-and-down direction.

FIG. 16 is a view showing a longitudinal section 834 of the modeled object 83 at a position of XVI-XVI in FIG. 15. In the longitudinal section 834, a rectangular strip-like area corresponding to the groove 831 is a non-writing area 836 on which writing is not instructed by the design data. In the exemplary case shown in FIG. 16, the size of the non-writing area 836 in the up-and-down direction is not larger than a predetermined correction threshold value, and in the following description, the non-writing area 836 will be also referred to as a "narrow non-writing area 836". Further, the correction threshold value (i.e., the correction threshold value in the up-and-down direction) may be the same as or different from the correction threshold value in the scan direction and the correction threshold value in the width direction described above. In the longitudinal section 834, rectangular areas on both sides of the narrow non-writing area 836 in the up-and-down direction are writing areas 835a and 835b, respectively, on which writing is instructed by the design data. In FIG. 16, the writing areas 835a and 835b are hatched.

In the three-dimensional modeling apparatus of Comparative Example in which no correction is performed on the design data, the light spots to be used for writing of the longitudinal section 834 in the above-described multi spot beam are lit up during writing of the writing target layer 92 corresponding to the writing area 835a, extinguished during writing of the writing target layer 92 corresponding to the narrow non-writing area 836, and lit up again during writing of the writing target layer 92 corresponding to the writing area 835b. For this reason, when writing is performed on an area of the writing area 835b, which is immediately above the narrow non-writing area 836, there is a possibility that fusion of the modeling material 91 contrary to the intention may occur in the narrow non-writing area 836 due to the heat or the like diffused downward from the area immediately above the narrow non-writing area 836.

In contrast to this, in the three-dimensional modeling apparatus 1 using the fifth correction method or the sixth correction method, the correction part 502 corrects the design data to thereby generate writing data, and by adjusting the light quantity profile of the multi spot beam to be emitted onto the writing target layer 92 on the basis of the writing data, the fusion of the modeling material 91 contrary to the intention is suppressed.

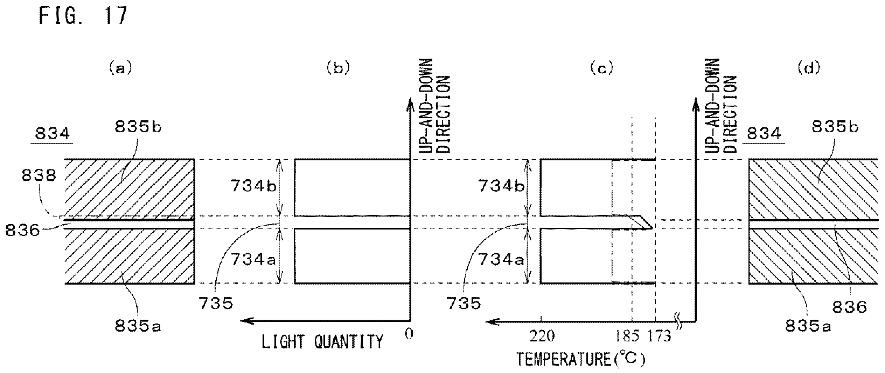

FIG. 17 is a view showing a light quantity profile and the like in performing writing corresponding to the longitudinal section 834 in the three-dimensional modeling apparatus 1 using the fifth correction method. FIG. 17(a) is a view showing a pattern (i.e., design pattern) on the design data in the longitudinal section 834. FIG. 17(b) is a graph showing the light quantity profile of the multi spot beam to be emitted onto each writing target layer 92 in the longitudinal section 834 on the basis of the writing data generated by the fifth correction method. The vertical axis in FIG. 17(b) represents the up-and-down direction and the horizontal axis thereof represents the light quantity. FIG. 17(c) is a view showing a temperature distribution in a plurality of writing target layers 92 corresponding to the longitudinal section 834. The vertical axis in FIG. 17(c) represents the up-and-down direction and the horizontal axis thereof represents the temperature of the modeling material 91 in each writing target layer 92. FIG. 17(d) is a view showing a pattern (i.e., writing pattern) which is actually written in the longitudinal section 834.

In the three-dimensional modeling apparatus 1 using the fifth correction method, by the correction of the design data by the correction part 502, as shown in FIG. 17(b), the width of an OFF area 735 corresponding to the narrow non-writing area 836 in the up-and-down direction is made larger than that of the narrow non-writing area 836 in the up-and-down direction in the design pattern shown in FIG. 17(a). Specifically, a boundary between an ON area 734b corresponding to the writing area 835b in the design pattern and an OFF area 735 is moved to an upper side (i.e., to the upper side in the up-and-down direction) in FIG. 17 with respect to a boundary between the writing area 835b and the narrow non-writing area 836. Further, a boundary between an ON area 734a corresponding to the writing area 835a and the OFF area 735 is positioned at the same position in the up-and-down direction as that of a boundary between the writing area 835a and the narrow non-writing area 836.

Specifically, in the three-dimensional modeling apparatus 1 using the fifth correction method, emission of light onto an area (hereinafter, also referred to as an "upper writing area 838") in the writing area 835b positioned on the upper side of the narrow non-writing area 836, which is adjacent to the narrow non-writing area 836, is suppressed. In other words, the accumulated light quantity in the upper writing area 838 per unit area is reduced to be lower than that in an area of the writing area 835b except the upper writing area 838 per unit area. In FIG. 17(a), the upper writing area 838 is surrounded by a two-dot chain line. The upper writing area 838 may be provided in only one writing target layer 92 adjacent to an upper side of the writing target layer 92 including the narrow non-writing area 836, or may be provided over the plurality of writing target layers 92 adjacent to the upper side of the writing target layer 92 including the narrow non-writing area 836.

Correction of the above-described light quantity profile is achieved by turning off one or more light spots (hereinafter, also referred to as a "narrow non-writing spot group") passing on the narrow non-writing area 836 among the plurality of light spots of the multi spot beam when the narrow non-writing spot group is positioned on the narrow non-writing area 836 in the writing target layer 92 including the narrow non-writing area 836 and also when the narrow non-writing spot group is positioned over the narrow non-writing area 836 in the writing target layer 92 including the upper writing area 838.

In a case where the narrow non-writing spot group includes two or more light spots, the two or more light spots are arranged in series in the arrangement direction of the plurality of light spots in the multi spot beam. In the above-described exemplary case, the narrow non-writing spot group consists of the plurality of light spots positioned at a left end portion of the multi spot beam in the width direction. Further, the narrow non-writing area 836 and the upper writing area 838 are continuous in the up-and-down direction, and any other area (i.e., any other writing target layer 92) does not exist between the narrow non-writing area 836 and the upper writing area 838 in the up-and-down direction. The writing target layer 92 including the upper writing area 838 may be one layer or may be a plurality of layers continuous in the up-and-down direction. It is preferable that the number of writing target layers 92 including the upper writing area 838 should increase as the difference between the melting point and the crystal point of the modeling material 91 becomes smaller.

In the three-dimensional modeling apparatus 1 using the fifth correction method, by correcting the light quantity profile of the multi spot beam to be emitted onto the plurality of writing target layers 92 corresponding to the longitudinal section 834 as shown in FIG. 17(b), excessive heat transfer from an ON area 734b corresponding to the upper writing area 838 to an OFF area 735 corresponding to the narrow non-writing area 836 is suppressed. For this reason, the temperature of the modeling material 91 in the OFF area 735 increases to be higher than the preheating temperature (e.g., 173 °C) to some degree, as indicated by the solid line in FIG. 17(c), but not to the degree in the three-dimensional modeling apparatus of Comparative Example. Further, after the thermal diffusion from the ON area 734b occurs with the passage of time, as indicated by the two-dot chain, the temperature of the modeling material 91 in a lower portion of the OFF area 735 becomes lower than the melting point (e.g., 185 °C), and the temperature of the modeling material 91 in an upper portion of the OFF area 735 becomes not lower than the melting point. Therefore, in the lower portion of the OFF area 735, the fusion of the modeling material 91 does not occur unlike in the three-dimensional modeling apparatus of Comparative Example. On the other hand, in the upper portion of the OFF area 735, the fusion of the modeling material 91 occurs as intended.

In the three-dimensional modeling apparatus 1 using the fifth correction method, the fusion of the modeling material 91 in the writing areas 835a and 835b is performed in accordance with the design data, and as shown in FIG. 17(d), it is possible to perform writing of a pattern on the plurality of writing target layers 92 laminated in the up-and-down direction with higher accuracy as compared with that in the three-dimensional modeling apparatus of Comparative Example.

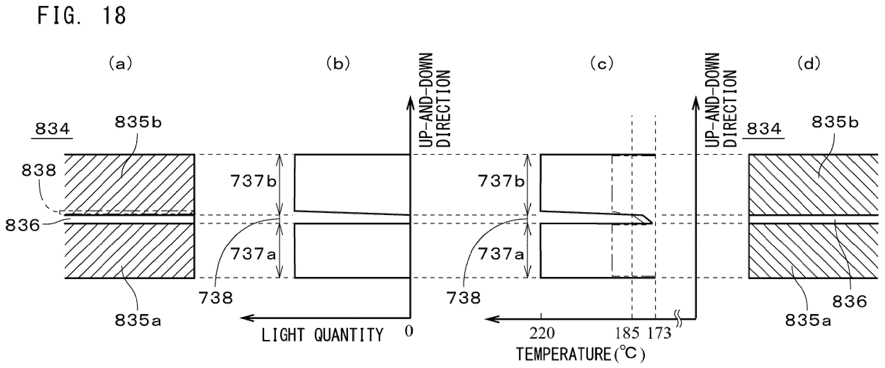

FIG. 18 is a view showing a light quantity profile and the like in performing writing corresponding to the longitudinal section 834 in the three-dimensional modeling apparatus 1 using the sixth correction method. FIG. 18(a) is a view showing a pattern (i.e., design pattern) on the design data in the longitudinal section 834. FIG. 18(b) is a graph showing the light quantity profile of the multi spot beam to be emitted onto each writing target layer 92 in the longitudinal section 834 on the basis of the writing data generated by the sixth correction method. The vertical axis in FIG. 18(b) represents the up-and-down direction and the horizontal axis thereof represents the light quantity. FIG. 18(c) is a view showing a temperature distribution in the plurality of writing target layers 92 corresponding to the longitudinal section 834. The vertical axis in FIG. 18(c) represents the up-and-down direction and the horizontal axis thereof represents the temperature of the modeling material 91 in each writing target layer 92. FIG. 18(d) is a view showing a pattern (i.e., writing pattern) which is actually written in the longitudinal section 834.

In the three-dimensional modeling apparatus 1 using the sixth correction method, by the correction of the design data by the correction part 502, as shown in FIG. 18(b), on an upper side of an OFF area 738 corresponding to the narrow non-writing area 836 in the up-and-down direction, a boundary between an ON area 737b corresponding to the writing area 835b in the design pattern and an OFF area 738 is tapered. Specifically, the light quantity at an end portion of the ON area 737b on the side of the OFF area 738 gradually decreases as the light goes nearer to the OFF area 738. The width of the OFF area 738 is the same as that of the narrow non-writing area 836 in the design pattern shown in FIG. 18(a). The width of the OFF area 738 may be larger or smaller than that of the narrow non-writing area 836. Further, a boundary between an ON area 737a corresponding to the writing area 835a and the OFF area 738 is positioned at the same position as that of a boundary between the writing area 835a and the narrow non-writing area 836 in the up-and-down direction.

Specifically, also in the three-dimensional modeling apparatus 1 using the sixth correction method, substantially like in the three-dimensional modeling apparatus 1 using the fifth correction method, emission of light onto the upper writing area 838 in the writing area 835b positioned on an upper side of the narrow non-writing area 836, which is adjacent to the narrow non-writing area 836, is suppressed. In other words, the accumulated light quantity in the upper writing area 838 per unit area is reduced to be lower than that in an area of the writing area 835b except the upper writing area 838 per unit area. In FIG. 18(a), the upper writing area 838 is surrounded by a two-dot chain line.

The upper writing area 838 is provided over the plurality of writing target layers 92 adjacent to the upper side of the writing target layer 92 including the narrow non-writing area 836. In the writing target layer 92 at the top stage of the upper writing area 838, the accumulated light quantity in the upper writing area 838 per unit area may be substantially the same as that in the area of the writing area 835b except the upper writing area 838 per unit area.

Correction of the above-described light quantity profile is achieved by turning off the narrow non-writing spot group among the plurality of light spots of the multi spot beam when the narrow non-writing spot group is positioned on the narrow non-writing area 836 in the writing target layer 92 including the narrow non-writing area 836 and by adjusting the light intensity of the narrow non-writing spot group to increase as the narrow non-writing spot group goes upward when the narrow non-writing spot group is positioned over the narrow non-writing area 836 in the plurality of writing target layers 92 including the upper writing area 838.

In a case where the narrow non-writing spot group includes two or more light spots, the two or more light spots are arranged in series in the arrangement direction of the plurality of light spots in the multi spot beam. Further, in the above-described exemplary case, the narrow non-writing spot group consists of the plurality of light spots positioned at the left end portion of the multi spot beam in the width direction. Furthermore, the narrow non-writing area 836 and the upper writing area 838 are continuous in the up-and-down direction, and any other area (i.e., any other writing target layer 92) does not exist between the narrow non-writing area 836 and the upper writing area 838 in the up-and-down direction. It is preferable that the number of writing target layers 92 including the upper writing area 838 should increase as the difference between the melting point and the crystal point of the modeling material 91 becomes smaller. The gradient of the light quantity profile in the upper writing area 838 thereby becomes gentler.

In the three-dimensional modeling apparatus 1 using the sixth correction method, by correcting the light quantity profile of the multi spot beam to be emitted onto the plurality of writing target layers 92 corresponding to the longitudinal section 834 as shown in FIG. 18(b), excessive heat transfer from the ON area 737b corresponding to the upper writing area 838 to the OFF area 738 corresponding to the narrow non-writing area 836 is suppressed. For this reason, the temperature of the modeling material 91 in the OFF area 738 increases to be higher than the preheating temperature (e.g., 173 °C) to some degree, as indicated by the solid line in FIG. 18(c), but does not increase up to the melting point (e.g., 185 °C) of the modeling material 91 also after the thermal diffusion from the ON area 737b occurs with the passage of time, as indicated by the two-dot chain. Therefore, in the OFF area 738, the fusion of the modeling material 91 does not occur unlike in the three-dimensional modeling apparatus of Comparative Example. Further, even if the fusion of the modeling material 91 somewhat occurs in the OFF area 738, the fusion is suppressed as compared with that of the modeling material 91 in the three-dimensional modeling apparatus of Comparative Example. On the other hand, in an area of the ON area 737b, which is adjacent to the OFF area 738, the fusion of the modeling material 91 occurs as intended.

In the three-dimensional modeling apparatus 1 using the sixth correction method, substantially like in the three-dimensional modeling apparatus 1 using the fifth correction method, the fusion of the modeling material 91 in the writing areas 835a and 835b is performed in accordance with the design data, and as shown in FIG. 18(d), it is possible to perform writing of a pattern on the plurality of writing target layers 92 laminated in the up-and-down direction with higher accuracy as compared with that in the three-dimensional modeling apparatus of Comparative Example.

In the three-dimensional modeling apparatus 1 using any one of the above-described first to sixth correction methods, the correction threshold value (i.e., the correction threshold value in the width direction, the correction threshold value in the scan direction, and the correction threshold value in the up-and-down direction) may be a variable threshold value which can be changed on the basis of the measurement result by the temperature measurement part 4.

In a case where a pattern corresponding to the transverse cross section 813 shown in FIG. 6 is written upward from the lower side of this figure (i.e., from the frontward side in the scan direction toward the backward side), for example, in a layer of a new modeling material 91 supplied on the layer of the modeling material 91 (i.e., already-written layer) corresponding to the transverse cross section 813, there sometimes arises a case where a temperature on the backward side in the scan direction becomes relatively high and a temperature on the frontward side in the scan direction becomes relatively low due to the thermal diffusion from the lower layer. In a case where such a temperature difference is caused, when a pattern corresponding to the transverse cross section 814 shown in FIG. 7 is written on the layer of the new modeling material 91, the fusion of the modeling material 91 contrary to the intention in the narrow non-writing area 816 is easier to occur on the backward side in the scan direction (i.e., the upper side of this figure) than on the frontward side in the scan direction (i.e., the lower side of this figure).

Then, in the three-dimensional modeling apparatus 1 using the first or second correction method, after the pattern corresponding to the transverse cross section 813 is written and before the pattern corresponding to the transverse cross section 814 is written, the temperature distribution in the upper surface of the modeling material 91 on the stage 341 is measured by the temperature measurement part 4. The temperature distribution measured by the temperature measurement part 4 is, for example, a temperature distribution in an upper surface of the writing target layer 92 on which the pattern corresponding to the transverse cross section 814 is to be written (i.e., the layer of the modeling material 91 which is newly supplied on the already-written layer). Alternatively, the temperature distribution in the upper surface of the writing target layer 92 on which the pattern corresponding to the transverse cross section 813 is written may be measured by the temperature measurement part 4.

Then, in the correction part 502, the above-described correction threshold value (i.e., the correction threshold value in the width direction) is changed on the basis of the temperatures in areas corresponding to the non-writing areas 816 and 817, which are measured by the temperature measurement part 4. The temperatures are temperatures in the areas to become the non-writing areas 816 and 817 when the pattern corresponding to the transverse cross section 814 is written and hereinafter will be also referred to as "non-writing area temperatures". In the correction part 502, as the non-writing area temperature becomes higher, the correction threshold value is made smaller. With this operation, when the non-writing area temperature is low, the non-writing area becomes harder to be determined as the narrow non-writing area, and when the non-writing area temperature is high, the non-writing area becomes easier to be determined as the narrow non-writing area.

As described above, in a case where the temperature of the pattern corresponding to the transverse cross section 813 is low on the lower side of this figure and high on the upper side of this figure, for example, in the pattern corresponding to the transverse cross section 814, an area in the narrow non-writing area 816, which is on the lower side of this figure, is not determined as a narrow non-writing area and only an area in the narrow non-writing area 816, which is on the upper side of this figure, is determined as a narrow non-writing area. In this case, correction using the first or second correction method is performed only on the area in the narrow non-writing area 816, which is on the upper side of this figure, and this correction is not performed on the area in the narrow non-writing area 816, which is on the lower side of this figure. It is thereby possible to perform writing of a pattern on the writing target layer 92 with higher accuracy.

Also in the three-dimensional modeling apparatus 1 using any one of the third to sixth correction methods, substantially similarly, as the temperature (i.e., the non-writing area temperature) in an area corresponding to the non-writing area 826 or 836 (see FIGs. 12 and 16), which is measured by the temperature measurement part 4, becomes higher, the correction threshold value (i.e., the correction threshold value in the scan direction and the correction threshold value in the up-and-down direction) is made smaller. It is thereby possible to perform writing of a pattern on the writing target layer 92 with higher accuracy.

In the three-dimensional modeling apparatus 1 using any one of the first to sixth correction methods, the degree to which emission of light onto the areas adjacent to the narrow non-writing areas 816, 826, and 836 (i.e., the narrow-portion adjacent area 818, the correction area 828, and the upper writing area 838) in the writing areas 815a, 815b, 825a, 825b, and 835b is suppressed may be changed on the basis of the measurement result by the temperature measurement part 4 (i.e., on the basis of the temperature of the already-written layer). It is thereby possible to perform writing of a pattern on the writing target layer 92 with still higher accuracy.

In the three-dimensional modeling apparatus 1 using the first correction method, for example, the width of the OFF area 715 corresponding to the narrow non-writing area 816 in the width direction is made larger as the temperature of the already-written layer becomes higher. In the three-dimensional modeling apparatus 1 using the second correction method, the gradient of the light quantity profile in the area corresponding to the narrow-portion adjacent area 818 in the ON areas 717a and 717b is made gentler as the temperature of the already-written layer becomes higher and the width of the narrow-portion adjacent area 818 in the width direction becomes larger.

In the three-dimensional modeling apparatus 1 using the third correction method, the width of the OFF area 725 corresponding to the narrow non-writing area 826 in the scan direction is made larger as the temperature of the already-written layer becomes higher. In the three-dimensional modeling apparatus 1 using the fourth correction method, the gradient of the light quantity profile in the area corresponding to the correction area 828 in the ON areas 727a and 727b is made gentler as the temperature of the already-written layer becomes higher and the width of the correction area 828 in the scan direction becomes larger.

In the three-dimensional modeling apparatus 1 using the fifth correction method, the width of the OFF area 735 corresponding to the narrow non-writing area 836 in the up-and-down direction is made larger as the temperature of the already-written layer becomes higher. In the three-dimensional modeling apparatus 1 using the sixth correction method, the gradient of the light quantity profile in the area corresponding to the upper writing area 838 in the ON area 737b is made gentler as the temperature of the already-written layer becomes higher and the width of the upper writing area 838 in the up-and-down direction becomes larger.

As described above, the three-dimensional modeling apparatus 1 includes the material holding part 3, the optical head 2, and the control part 5. The material holding part 3 has the stage 341 for holding the powdery modeling material 91 and the material supply part 32 for supplying the modeling material 91 onto the stage 341. The optical head 2 scans the multi spot beam consisting of the plurality of light spots which are linearly arranged in a predetermined arrangement direction on the modeling material 91 on the stage 341 while modulating the multi spot beam. The control part 5 controls the material holding part 3 and the optical head 2 on the basis of the design data of the modeled object 81, 82, or 83 to supply the modeling material 91 onto the stage 341 and scan the multi spot beam in a predetermined scan direction on the writing target layer 92 which is a surface layer of the supplied modeling material 91, to thereby repeat fusing the modeling material 91 in an area on which light is emitted and writing of a pattern,

The non-writing areas 816, 817, 826, and 836 on which writing is not instructed by the above-described design data include narrow non-writing areas 816, 826, and 836 whose size in one direction of the scan direction, the width direction perpendicular to the scan direction and parallel to the stage 341, and the up-and-down direction perpendicular to the stage 341 is not larger than the correction threshold value. Then, with a control by the control part 5, emission of light is suppressed onto the areas (in the above-described exemplary case, the narrow-portion adjacent area 818, the correction area 828, and the upper writing area 838) adjacent to the narrow non-writing areas 816, 826, and 836 in the writing areas 815a, 815b, 815c, 825a, 825b, 835a, and 835b on which writing is instructed by the design data.

As described above, it is thereby possible to suppress fusion of the modeling material 91 contrary to the intention in the narrow non-writing areas 816, 826, and 836. As a result, even in a case where the modeled object 81, 82, or 83 includes the narrow non-writing area 816, 826, or 836, it is possible to form the modeled object 81, 82, or 83 with high accuracy.

As described above, the above-described one direction of the narrow non-writing area 816 is the width direction. Preferably, when the narrow non-writing spot group which includes one or more light spots passing on the narrow non-writing area 816 among the plurality of light spots described above is positioned on the narrow non-writing area 816, with a control by the control part 5, the narrow non-writing spot group and two correction spot groups adjacent to the narrow non-writing spot group on both sides in the arrangement direction are turned off. It is thereby possible to form the modeled object 81 including the narrow non-writing area 816 having a small width in the width direction with high accuracy.

As described above, the above-described one direction of the narrow non-writing area 816 is the width direction. Preferably, adjustment of gradation is possible in the plurality of light spots of the multi spot beam. Preferably, when the narrow non-writing spot group which includes one or more light spots passing on the narrow non-writing area 816 among the plurality of light spots is positioned on the narrow non-writing area 816, with a control by the control part 5, the narrow non-writing spot group is turned off. More preferably, when the narrow non-writing spot group is positioned on the narrow non-writing area 816, with a control by the control part 5, in two correction spot groups adjacent to the narrow non-writing spot group on both sides in the arrangement direction, the light intensity of two or more light spots included in each correction spot group is adjusted to increase as the light spots go away from the narrow non-writing spot group in the arrangement direction. It is thereby possible to form the modeled object 81 including the narrow non-writing area 816 having a small width in the width direction with high accuracy.

As described above, the above-described one direction of the narrow non-writing area 826 is the scan direction. Preferably, with a control by the control part 5, the narrow non-writing spot group which includes one or more light spots passing on the narrow non-writing area 826 among the plurality of light spots of the multi spot beam is turned off when the narrow non-writing spot group is positioned on the narrow non-writing area 826. Further, preferably, with a control by the control part 5, the narrow non-writing spot group is turned off also when the narrow non-writing spot group is positioned on the correction areas 828 adjacent to the narrow non-writing area 826 on both sides in the scan direction. It is thereby possible to form the modeled object 82 including the narrow non-writing area 826 having a small width in the scan direction with high accuracy.

As described above, the above-described one direction of the narrow non-writing area 826 is the scan direction. Preferably, adjustment of gradation is possible in the plurality of light spots of the multi spot beam. Further, preferably, with a control by the control part 5, the narrow non-writing spot group which includes one or more light spots passing on the narrow non-writing area 826 among the plurality of light spots is turned off when the narrow non-writing spot group is positioned on the narrow non-writing area 826. More preferably, with a control by the control part 5, the light intensity of the narrow non-writing spot group is adjusted to increase as the narrow non-writing spot group goes away from the narrow non-writing area 826 in the scan direction when the narrow non-writing spot group is positioned on the correction areas 828 adjacent to the narrow non-writing area 826 on both sides in the scan direction. It is thereby possible to form the modeled object 82 including the narrow non-writing area 826 having a small width in the scan direction with high accuracy.

As described above, the above-described one direction of the narrow non-writing area 836 is the up-and-down direction. Preferably, with a control by the control part 5, the narrow non-writing spot group which includes one or more light spots passing on the narrow non-writing area 836 among the plurality of light spots of the multi spot beam is turned off when the narrow non-writing spot group is positioned on the narrow non-writing area 836 in the writing target layer 92 including the narrow non-writing area 836. Further, preferably, with a control by the control part 5, the narrow non-writing spot group is turned off also when the narrow non-writing spot group is positioned over the narrow non-writing area 836 in the writing target layer 92 including the upper writing area 838 adjacent to an upper side of the narrow non-writing area 836. It is thereby possible to form the modeled object 83 including the narrow non-writing area 836 having a small width in the up-and-down direction with high accuracy.

As described above, the above-described one direction of the narrow non-writing area 836 is the up-and-down direction. Preferably, adjustment of gradation is possible in the plurality of light spots of the multi spot beam. Further, preferably, with a control by the control part 5, the narrow non-writing spot group which includes one or more light spots passing on the narrow non-writing area 836 among the plurality of light spots of the multi spot beam is turned off when the narrow non-writing spot group is positioned on the narrow non-writing area 836 in the writing target layer 92 including the narrow non-writing area 836. More preferably, with a control by the control part 5, the light intensity of the narrow non-writing spot group is adjusted to increase as the narrow non-writing spot group goes upward when the narrow non-writing spot group is positioned over the narrow non-writing area 836 in the plurality of writing target layers 92 including the upper writing area 838 adj acent to the upper side of the narrow non-writing area 836. It is thereby possible to form the modeled object 83 including the narrow non-writing area 836 having a small width in the up-and-down direction with high accuracy.

As described above, it is preferable that the three-dimensional modeling apparatus 1 further includes the temperature measurement part 4 for measuring the temperature distribution on the upper surface of the modeling material 91 on the stage 341. Further, preferably, the above-described correction threshold value is variable, and the correction threshold value becomes smaller as the temperature in the areas corresponding to th non-writing areas 816, 817, 826, and 836, which is measured by the temperature measurement part 4, increases. It is thereby possible to suitably suppress occurrence of the fusion of the modeling material 91 contrary to the intention in the narrow non-writing area 816, 826, or 836. As a result, even when the modeled object 81, 82, or 83 includes the narrow non-writing area 816, 826, or 836, respectively, it is thereby possible to form the modeled object 81, 82, or 83 with higher accuracy.

The above-described three-dimensional modeling method includes a step (Step S13) of supplying the powdery modeling material 91 onto the stage 341, a step (Step S14) of scanning, in the predetermined scan direction, the multi spot beam consisting of the plurality of light spots which are linearly arranged in the predetermined arrangement direction, while modulating the multi spot beam on the basis of design data of the modeled object on the writing target layer 92 which is the surface layer of the modeling material 91 supplied onto the stage 341, and a step (Step S15) of repeating Steps S13 and S14.

The non-writing area 816, 817, 826, or 836 on which writing is not instructed by the above-described design data includes the narrow non-writing area 816, 826, or 836 whose size in one direction of the scan direction, the width direction perpendicular to the scan direction and parallel to the stage 341, and the up-and-down direction perpendicular to the stage 341 is not larger than the correction threshold value. Then, in Step S14, emission of light is suppressed onto the area (in the above-described exemplary case, the narrow-portion adjacent area 818, the correction area 828, or the upper writing area 838) adjacent to the narrow non-writing area 816, 826, or 836 in the writing areas 815a, 815b, 815c, 825a, 825b, 835a, and 835b on which writing is instructed by the design data.

As described above, it is thereby possible to suppress occurrence of fusion of the modeling material 91 contrary to the intention in the narrow non-writing area 816, 826, or 836. As a result, even when the modeled object 81, 82, or 83 includes the narrow non-writing area 816, 826, or 836, it is possible to form the modeled object 81, 82, or 83 with high accuracy.

In the three-dimensional modeling apparatus 1 and the three-dimensional modeling method described above, various modifications can be made.

For example, above-described Step S13 (supplying the modeling material 91 onto the stage 341) may be executed concurrently with Step S12 (correcting the design data) or may be executed before Step S12.

In Step S12, correction of the design data may be performed by any one of various methods other than the above-described first to sixth correction methods.

The above-described narrow non-writing area 816, 826, or 836 may have a size in each of two or more directions among the scan direction, the width direction, and the up-and-down direction, which is not larger than the correction threshold value in the direction. In this case, the above-described correction may be performed on each of the two or more directions.

In the three-dimensional modeling apparatus 1, the measurement of the temperature distribution by the temperature measurement part 4 does not necessarily need to be performed. In a case where the measurement of the temperature distribution is not performed, the temperature measurement part 4 may be omitted from the three-dimensional modeling apparatus 1.

The configurations in the above-described preferred embodiment and variations may be combined as appropriate only if those do not conflict with one another.

While the invention has been shown and described in detail, the foregoing description is in all aspects illustrative and not restrictive. It is therefore understood that numerous modifications and variations can be devised without departing from the scope of the invention.

### REFERENCE SIGNS LIST

- 1: Three-dimensional modeling apparatus
- 2: Optical head
- 3: Material holding part
- 4: Temperature measurement part
- 5: Control part
- 32: Material supply part
- 81, 82, 83: Modeled object
- 91: Modeling material
- 92: Writing target layer
- 341: Stage
- 815a, 815b, 815c, 825a, 825b, 835a, 835b: Writing area
- 816, 826, 836: Narrow non-writing area
- 818: Narrow-portion adjacent area
- 828: Correction area
- 838: Upper writing area
- S11 to S15: Step

## Claims

1. A three-dimensional modeling apparatus, comprising:
a material holding part having a stage for holding a powdery modeling material and a material supply part for supplying a modeling material onto said stage;
an optical head for scanning a multi spot beam consisting of a plurality of light spots which are linearly arranged in a predetermined arrangement direction while modulating said multi spot beam on a modeling material on said stage; and
a control part for controlling said material holding part and said optical head on the basis of design data of a modeled object to supply a modeling material onto said stage and scan said multi spot beam in a predetermined scan direction on a writing target layer which is a surface layer of a supplied modeling material, to thereby repeat fusing a modeling material in an area on which light is emitted writing of a pattern,
wherein a non-writing area on which writing is not instructed by said design data includes a narrow non-writing area whose size in one direction of said scan direction, a width direction perpendicular to said scan direction and parallel to said stage, and an up-and-down direction perpendicular to said stage is not larger than a correction threshold value, and
emission of light onto an area adjacent to said narrow non-writing area in a writing area on which writing is instructed by said design data is suppressed with a control by said control part.

2. The three-dimensional modeling apparatus according to claim 1, wherein
said one direction of said narrow non-writing area is said width direction, and
when a narrow non-writing spot group which includes one or more light spots passing on said narrow non-writing area among said plurality of light spots is positioned on said narrow non-writing area, said narrow non-writing spot group and two correction spot groups adjacent to said narrow non-writing spot group on both sides in said arrangement direction are turned off with a control by said control part.

3. The three-dimensional modeling apparatus according to claim 1, wherein
adjustment of gradation is possible in said plurality of light spots,
said one direction of said narrow non-writing area is said width direction,
when a narrow non-writing spot group which includes one or more light spots passing on said narrow non-writing area among said plurality of light spots is positioned on said narrow non-writing area, with a control by said control part,
said narrow non-writing spot group is turned off, and
light intensity of two or more light spots included in each correction spot group in two correction spot groups adjacent to said narrow non-writing spot group on both sides in said arrangement direction is adjusted to increase as said light spots go away from said narrow non-writing spot group in said arrangement direction.

4. The three-dimensional modeling apparatus according to any one of claims 1 to 3, wherein
said one direction of said narrow non-writing area is said scan direction,
with a control by said control part,
a narrow non-writing spot group which includes one or more light spots passing on said narrow non-writing area among said plurality of light spots is turned off when said narrow non-writing spot group is positioned on said narrow non-writing area, and
said narrow non-writing spot group is turned off also when said narrow non-writing spot group is positioned on correction areas adjacent to said narrow non-writing area on both sides in said scan direction.

5. The three-dimensional modeling apparatus according to any one of claims 1 to 3, wherein
adjustment of gradation is possible in said plurality of light spots,
said one direction of said narrow non-writing area is said scan direction,
with a control by said control part,
a narrow non-writing spot group which includes one or more light spots passing on said narrow non-writing area among said plurality of light spots is turned off when said narrow non-writing spot group is positioned on said narrow non-writing area, and
light intensity of said narrow non-writing spot group is adjusted to increase as said narrow non-writing spot group goes away from said narrow non-writing area in said scan direction when said narrow non-writing spot group is positioned on correction areas adjacent to said narrow non-writing area on both sides in said scan direction.

6. The three-dimensional modeling apparatus according to any one of claims 1 to 5, wherein
said one direction of said narrow non-writing area is said up-and-down direction,
with a control by said control part,
a narrow non-writing spot group which includes one or more light spots passing on said narrow non-writing area among said plurality of light spots is turned off when said narrow non-writing spot group is positioned on said narrow non-writing area in a writing target layer including said narrow non-writing area, and
said narrow non-writing spot group is turned off also when said narrow non-writing spot group is positioned over said narrow non-writing area in said writing target layer including an upper writing area adjacent to an upper side of said narrow non-writing area.

7. The three-dimensional modeling apparatus according to any one of claims 1 to 5, wherein
adjustment of gradation is possible in said plurality of light spots,
said one direction of said narrow non-writing area is said up-and-down direction,
with a control by said control part,
a narrow non-writing spot group which includes one or more light spots passing on said narrow non-writing area among said plurality of light spots is turned off when said narrow non-writing spot group is positioned on said narrow non-writing area in a writing target layer including said narrow non-writing area, and
light intensity of said narrow non-writing spot group is adjusted to increase as said narrow non-writing spot group goes upward when said narrow non-writing spot group is positioned over said narrow non-writing area in a plurality of writing target layers including an upper writing area adjacent to an upper side of said narrow non-writing area.

8. The three-dimensional modeling apparatus according to any one of claims 1 to 7, further comprising:
a temperature measurement part for measuring a temperature distribution on an upper surface of a modeling material on said stage,
wherein said correction threshold value is variable, and
said correction threshold value becomes smaller as a temperature increases, said temperature being in an area corresponding to said non-writing area and measured by said temperature measurement part.

9. A three-dimensional modeling method, comprising:
a) supplying a powdery modeling material onto a stage;
b) scanning a multi spot beam in a predetermined scan direction, said multi spot beam consisting of a plurality of light spots which are linearly arranged in a predetermined arrangement direction, while modulating said multi spot beam on the basis of design data of a modeled object on a writing target layer which is a surface layer of a modeling material supplied onto said stage; and
c) repeating said operations a) and b),
wherein a non-writing area on which writing is not instructed by said design data includes a narrow non-writing area whose size in one direction of said scan direction, a width direction perpendicular to said scan direction and parallel to said stage, and an up-and-down direction perpendicular to said stage is not larger than a correction threshold value, and
emission of light onto an area adjacent to said narrow non-writing area in a writing area on which writing is instructed by said design data is suppressed in said operation b).
